# EUROPEAN PATENT APPLICATION

(11) **EP 4 483 693 A1**
(43) Date of publication of application: **01.01.2025**
(21) Application number: 24172658.7
(22) Date of filing: 26.04.2024
(51) Int. Cl.: A01B 79/00, A01D 41/127

(54) **METHODS, SYSTEMS, APPARATUS, AND ARTICLES OF MANUFACTURE TO MONITOR PERFORMANCE OF AN AGRICULTURAL VEHICLE**

(30) Priority: 30.06.2023 US 202363511561 P; 08.08.2023 US 202318446189; 07.11.2023 US 202318503896
(71) Applicant: Deere & Company, Moline, IL 61265 (US)
(72) Inventor: Vandike, Nathan Ross, Geneseo, 61254 (US); Anderson, Noel Wayne, Fargo, 58102 (US); Wonderlich, Grant Jacob, Milan, 61264 (US); Bhavsar, Mehul Pankajkumar, 412307 Pune (IN); Bhargava, Pallavi, 411028 Pune (IN)
(74) Representative: Reddie & Grose LLP

(57) **Abstract**

Methods, systems, apparatus, and articles of manufacture to monitor performance of an agricultural vehicle are disclosed. An example apparatus disclosed herein includes memory, machine readable instructions, and programmable circuitry to execute the machine readable instructions to access an image captured by a camera associated with an agricultural vehicle, obtain reference data corresponding to the image, determine a performance metric corresponding to the image, generate interactive display information by storing, in association with the reference data, (a) the image and (b) the performance metric, and cause presentation of the interactive display information via a user interface.

## Description

### FIELD OF THE DISCLOSURE

This disclosure relates generally to agricultural vehicles and, more particularly, to methods, systems, apparatus, and articles of manufacture to monitor performance of an agricultural vehicle.

### BACKGROUND

Agricultural vehicles commonly include cameras and/or other sensors to obtain performance data associated with one or more operations (e.g., harvesting, tilling, planting, spraying, etc.) of the agricultural vehicle. In some instances, the performance data is associated with a residue system (e.g., a crop residue system, a residue management system) of the agricultural vehicle. Crop residue is commonly a byproduct of a crop harvesting operation. Typically, crop residue is produced as a result of a harvester (e.g., a combine harvester) performing threshing and/or separating processes on a crop plant. In some instances, crop residue includes straw, chaff, and/or other unwanted portions of a crop plant. Additionally, crop residue may additionally include other biomass such as weeds, weed seeds, and the like. The crop residue is typically discharged from the harvester during operation on a field.

### BRIEF DESCRIPTION OF THE DRAWINGS

FIG. 1A illustrates an example vehicle implementing example performance monitoring circuitry in accordance with teachings of this disclosure.
FIG. 1B illustrates an example crop residue system of the example vehicle of FIG. 1A.
FIG. 2 is a block diagram of the example performance monitoring circuitry of FIG. 1A.
FIG. 3 illustrates an example map generated by the example performance monitoring circuitry of FIGS. 1A and/or 2.
FIG. 4 illustrates an example plot generated by the example performance monitoring circuitry of FIGS. 1A and/or 2.
FIG. 5 illustrates an example table representing example performance information that can be monitored and/or obtained by the performance monitoring circuitry of FIG. 2.
FIG. 6 is a flowchart representative of example machine readable instructions and/or example operations that may be executed, instantiated, and/or performed by example programmable circuitry to implement the performance monitoring circuitry of FIG. 2.
FIG. 7 is a flowchart representative of example machine readable instructions and/or example operations that may be executed, instantiated, and/or performed by example programmable circuitry to update interactive display information in connection with block 616 of FIG. 6.
FIG. 8 is a block diagram of an example processing platform including programmable circuitry structured to execute, instantiate, and/or perform the example machine readable instructions and/or perform the example operations of FIGS. 6 and/or 7 to implement the performance monitoring circuitry of FIG. 2.
FIG. 9 is a block diagram of an example implementation of the programmable circuitry of FIG. 8.
FIG. 10 is a block diagram of another example implementation of the programmable circuitry of FIG. 8.

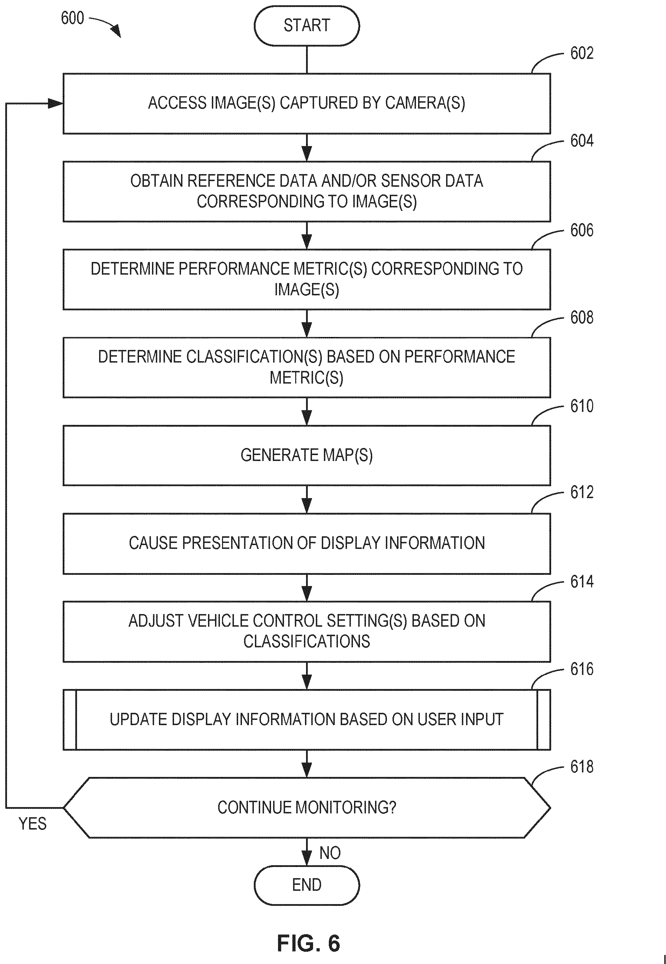

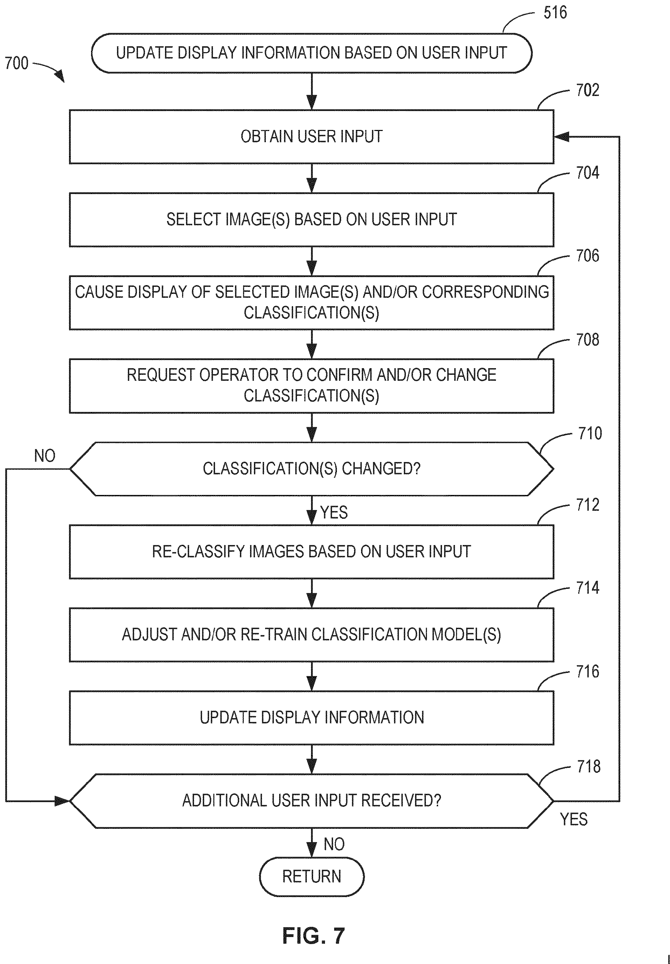

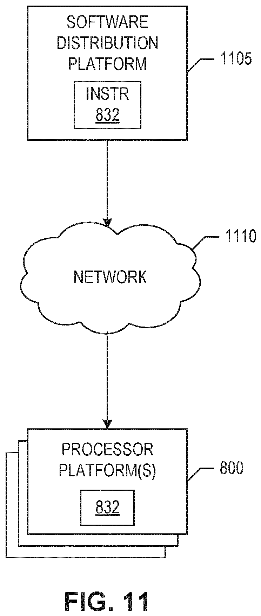

FIG. 11 is a block diagram of an example software/firmware/instructions distribution platform (e.g., one or more servers) to distribute software, instructions, and/or firmware (e.g., corresponding to the example machine readable instructions of FIGS. 6 and/or 7) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified in the below description.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

### DETAILED DESCRIPTION

Automation of vehicles (e.g., agricultural vehicles) is commercially desirable because automation can improve the accuracy with which operations (e.g., harvesting, tilling, planting, spraying, etc.) are performed, reduce operator fatigue, improve efficiency, and accrue other benefits.

Agricultural vehicles typically include one or more example vehicle systems (e.g., a furrow cleaner, a sprayer, a furrow opener, etc.) to perform one(s) of the operations. For instance, some agricultural vehicles, such as harvesters (e.g., combine harvesters), include residue systems to automatically process and/or output a portion of crop plant material gathered by the vehicle. During operation of the vehicle, the vehicle can perform threshing, separating, and/or cleaning processes to separate the crop plant material into grain material (e.g., corn, wheat, oats, etc.) and crop residue (e.g., straw, chaff, material other than grain (MOG), etc.). In some instances, the crop residue is provided to the residue system, where the residue system includes a chopper to chop the crop residue and/or a spreader to output (e.g., distribute, discharge) the chopped crop residue from the vehicle. The crop residue can be distributed across portions of a field to supply nutrients to soil in the field, maintain a moisture level and/or temperature of the soil, etc.

In some cases, one or more parameters of the vehicle system(s) can be adjusted to control one or more performance metrics associated therewith. For instance, a chop characteristic (e.g., an average chop length, a minimum and/or maximum chop length, etc.) of crop residue processed and/or output by the residue system can be adjusted based on a rotation speed of the chopper, distances between counter knives of the chopper, a number of and/or positions of the counter knives, etc. Additionally or alternatively, a spread characteristic (e.g., a width of spread, an area of spread) of the crop residue can be adjusted based on vane positions and/or speed of the spreader, where the vane positions control a direction of output of crop residue from the vehicle.

In some instances, in addition to or instead of the crop residue metrics, the adjusted performance metrics can include grain quality of crop material harvested by the vehicle, processed forage or kernel quality of forage harvested by the vehicle, height and/or orientation of downed crop in a field, presence of weeds and/or obstacles in the field, dimensions and/or shape of trenches in the field, soil moisture levels, locations of material (e.g., seeds, fertilizer, etc.) output onto the field, etc. In some cases, one(s) of the performance metrics can be adjusted and/or monitored based on sensor data from one or more sensors associated with the vehicle (e.g., camera(s), position sensor(s), infrared sensor(s), laser sensor(s), flow sensor(s), capacitive sensor(s), structured light sensor(s), radar sensor(s), sonar sensor(s), etc.)

In some cases, because one(s) of the vehicle systems can be located proximate a rear of the vehicle and/or are not typically visible from a vehicle cab, monitoring performance of the vehicle system(s) by an operator may be difficult during operation of the vehicle. As such, the performance of the vehicle system(s) is often not considered by the operator until after completion of the operation. Thus, some parameters of the vehicle system(s) (e.g., rotation speed of the chopper, distances between counter knives of the chopper, a number and/or positions of the counter knives, depth and/or angular position of a tillage tool, etc.) are often not adjusted during operation of the vehicle, resulting in one or more performance metrics not satisfying corresponding threshold(s).

Examples disclosed herein gather and/or display performance data associated with one or more example agricultural operations (e.g., harvesting, tilling, planting, spraying, etc.) of a vehicle (e.g., an agricultural vehicle), thus enabling an operator to monitor performance of one or more example vehicle systems during operation (e.g., in substantially real time) and/or after the operation. Example performance monitoring circuitry disclosed herein accesses one or more example images captured by a camera associated with the vehicle, and obtains reference data including time(s) and/or geographic location(s) at which the image(s) were captured. In some examples, the performance monitoring circuitry determines one or more example performance metrics based on the image(s), where the performance metric(s) can include example crop residue metrics (e.g., a crop residue length, a crop residue spread, etc.) of the crop residue represented in the corresponding image(s). Additionally or alternatively, the performance metric(s) can correspond to grain quality of crop material harvested by the vehicle, height and/or orientation of downed crop in an example field, presence of weeds and/or obstacles in the field, dimensions and/or shape of furrows generated and/or traversed by the vehicle, etc.

In some examples, the performance monitoring circuitry determines, based on the performance metric(s), example classification(s) for the corresponding image(s). In some examples, the classification(s) indicate whether crop residue represented in the image(s) is underprocessed, overprocessed, or satisfactory. In some examples, the classification(s) indicate whether harvested grain represented in the image(s) is high quality grain or low quality grain (e.g., based on an amount of clean and/or unbroken grain relative to an amount of broken grain and/or material other than grain). In some examples, the performance monitoring circuitry stores the image(s), the classification(s), and/or the performance metric(s) in association with the corresponding reference data to generate interactive display information (e.g., one or more example maps and/or plots), and causes presentation of the interactive display information via a user interface of the vehicle. In some examples, via the user interface, the operator can change and/or confirm one(s) of the classifications, cause the user interface to display and/or enlarge one(s) of the images, etc. In some examples, the performance monitoring circuitry adjusts and/or re-trains one or more example classification model(s) and/or one or more classification threshold(s) based on the operator confirming and/or changing the one(s) of the classifications. In some examples, the interactive display information can be provided to a remote device (e.g., a mobile device, a computer, etc.) that is separate from the vehicle, such that that interactive display information can be presented to and/or updated by a remote operator in substantially real time and/or after an operation by the vehicle.

Advantageously, examples disclosed herein enable an operator of a vehicle to visually inspect performance of one or more vehicle systems at different times and/or locations during operation of the vehicle. As a result, examples disclosed herein enable adjustment of one or more parameters of the vehicle system(s) (e.g., travel speed of the vehicle, height and/or position of the header of the vehicle, depth of a furrow opener and/or furrow cleaner, etc.) based on the associated performance metric(s). For example, the adjustment can be made during an operation (e.g., in substantially real time), after a portion of the operation is complete, and/or after all of the operation is complete. Thus, examples disclosed herein can improve performance of the vehicle system(s) by reducing an amount of underprocessed and/or overprocessed crop residue output by the residue system, adjusting an amount and/or a characteristic of crop material harvested by the vehicle, adjusting dimensions of trenches generated by the vehicle, etc.

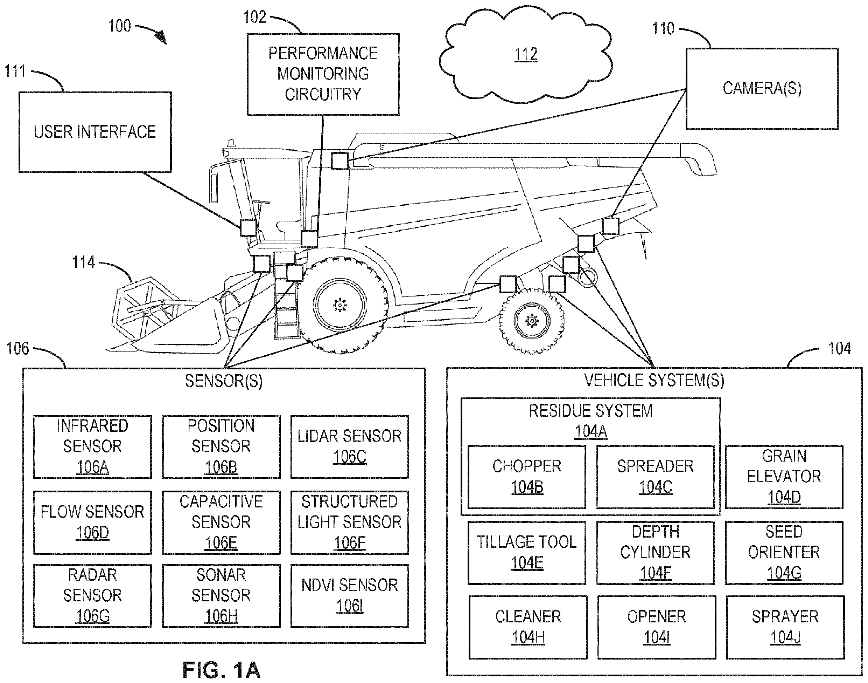

FIG. 1A is a block diagram of an example vehicle 100 implementing example performance monitoring circuitry 102 in accordance with teachings of this disclosure. In the illustrated example of FIG. 1A, the vehicle 100 includes one or more example vehicle systems 104 to perform one or more example operations of the vehicle 100. For example, the vehicle 100 can perform at least one of a harvesting operation, a tilling operation, a planting operation, or a spraying operation using one(s) of the vehicle systems 104. In this example, the vehicle 100 further includes one or more example sensors (e.g., vehicle sensors) 106, one or more example cameras 110, and an example user interface 111. In this example, the performance monitoring circuitry 102 is communicatively coupled to an example network 112. In this example, the performance monitoring circuitry 102 is implemented locally at the vehicle 100 to monitor performance associated with the one or more operations (e.g., harvesting, tilling, planting, spraying, etc.) of the vehicle 100. In some examples, the performance monitoring circuitry 102 can be implemented remotely (e.g., in a cloud-based environment, on another vehicle and/or device, etc.), and the performance monitoring circuitry 102 provides performance information to the vehicle 100 via the network 112. In the example of FIG. 1A, the vehicle 100 is a harvester (e.g., a combine harvester). In some examples, the vehicle 100 can be a different type of agricultural vehicle (e.g., a tractor, front loader, cultivator, or any other suitable vehicle).

In the illustrated example of FIG. 1A, the systems 104 include an example residue system (e.g., a crop residue system, a residue management system) 104A including an example chopper 104B and an example spreader 104C. In some examples, the systems 104 further include an example grain elevator 104D, an example tillage tool 104E, an example position cylinder (e.g., a depth and/or angular control cylinder) 104F, an example seed orienter 104G, an example cleaner (e.g., a row cleaner) 104H, an example opener (e.g., a seed opener, a disc opener) 1041, and/or an example sprayer (e.g., a spray boom) 104J. In some examples, one or more of the systems 104 can be omitted from the vehicle 100, and/or one or more additional systems can be included in the vehicle 100 instead. For example, the systems 104 can include an example kernel processor to process forage and/or kernels harvested by the vehicle 100. In some examples, the performance monitoring circuitry 102 can monitor, based on sensor data, a kernel quality and/or a forage quality of forage material processed by the kernel processor. In some examples, the performance monitoring circuitry 102 can adjust the kernel quality and/or the forage quality by adjusting one or more actuators associated with the kernel processor.

In some examples, the residue system 104A processes and/or distributes crop residue produced during an operation (e.g., a harvesting operation) of the vehicle 100 on a field. In some examples, as the vehicle 100 travels across the field, the vehicle 100 gathers crop plant material and performs threshing, separating, and/or cleaning processes to separate the crop plant material into grain material (e.g., corn, wheat, oats, etc.) and crop residue (e.g., material other than grain (MOG)). In such examples, the crop residue can include straw, chaff, stems, and/or other non-targeted portions of the crop plant. In some examples, the residue system 104A can chop and/or spread (e.g., distribute, discharge) the crop residue onto the field behind the vehicle 100. In some examples, the crop residue is distributed in one or more layers across portions of the field, where the crop residue can be used to supply nutrients to soil in the field and/or to maintain a moisture level and/or temperature of the soil until a next planting season.

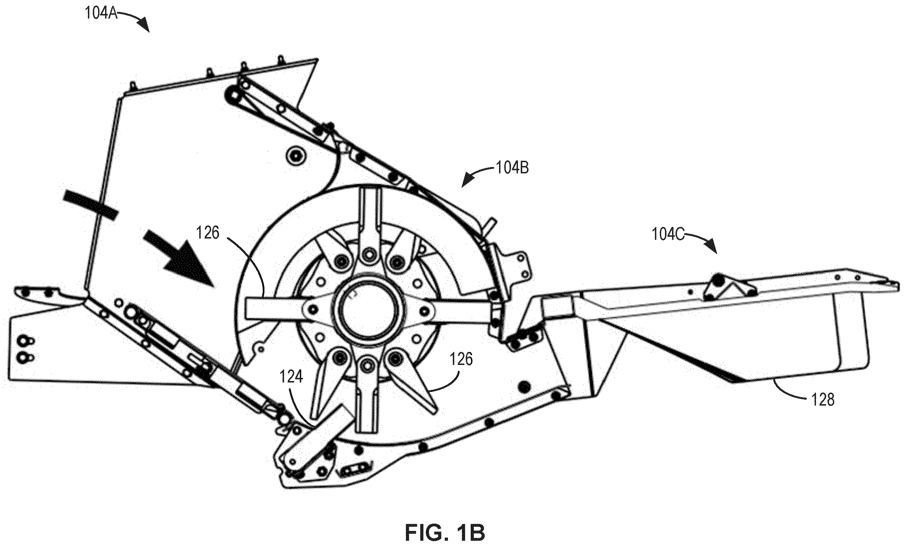

Turning to FIG. 1B, the example residue system 104A shown in FIG. 1B includes the example chopper 104B to chop the crop residue prior to spreading, and the example spreader 104C to spread (e.g., distribute, discharge) the chop residue from the residue system 104A. In some examples, the chopper 104B includes example stationary counter knives (e.g., vanes) 124 and example rotating counter knives 126. In some examples, the rotating counter knives 126 are rotated relative to the stationary counter knives 124 to produce a shearing effect for chopping the crop residue. In some examples, the residue system 104A can adjust a chop quality of the crop residue by adjusting a rotation speed of the rotating counter knives 126, adjusting distances between the rotating and stationary counter knives 124, 126, adjusting a speed of the crop residue though the chopper 104B, etc. In some examples, the chop quality is based on a length (e.g., an average length) of the chopped crop residue. In some examples, the spreader 104C of the residue system 104A includes example vanes 128 to control a direction of spread of the crop residue. In some examples, the residue system 104A can adjust angles of the vanes 128 to adjust a width of the spread of the crop residue. In some examples, the residue system 104A can adjust a speed of the crop residue through the spreader 104C to adjust the spread of the crop residue.

Returning to FIG. 1A, the example sensors 106 collect and/or otherwise obtain sensor data associated with the vehicle 100. In this example, the sensors 106 can include an example infrared sensor (e.g., a thermal imaging sensor) 106A, an example position sensor (e.g., a global positioning system (GPS) sensor) 106B, an example laser sensor (e.g., a lidar sensor, a laser diffraction sensor) 106C, an example flow sensor 106D, an example capacitive sensor 106E, an example structured light sensor 106F, an example radar sensor 106G, an example sonar sensor (e.g., an ultrasonic sensor) 106H, and/or an example normalized difference vegetation index (NDVI) sensor 1061. In some examples, the vehicle 100 can include one or more additional and/or different types of sensors (e.g., in addition to and/or instead of one(s) of the sensors 106 shown in FIG. 1). For example, the vehicle 100 can additionally or alternatively include one or more pressure sensors, loss sensors, capacitive sensors, etc. In some examples, the sensor(s) 106 provide the sensor data to the performance monitoring circuitry 102 for use in monitoring performance of the vehicle 100 and/or the system(s) 104. Additionally or alternatively, the sensor(s) 106 can be communicatively coupled to the network 112 to provide the sensor data to a cloud-based storage environment, to one or more other vehicles, etc.

In the example of FIG. 1A, the camera(s) 110 capture one or more example images representative of a scene surrounding the vehicle 100 and/or internal to the vehicle 100. For example, the camera(s) 110 can include one or more front cameras (e.g., forward-facing camera(s)) positioned proximate a front end of the vehicle 100 to capture image(s) corresponding to a forward-facing scene of the vehicle 100, and/or one or more rear cameras (e.g., rearward-facing camera(s)) positioned proximate a rear end of the vehicle 100 to capture image(s) corresponding to a rearward-facing scene of the vehicle 100. Additionally or alternatively, the camera(s) 110 can include one or more internal cameras to capture image(s) of a scene internal to the vehicle 100, and/or can include one or more external cameras to capture image(s) of a scene external to the vehicle 100. For example, the image(s) can represent harvested grain passing through one or more of the systems 104 (e.g., the grain elevator 104D, etc.), and/or can represent the crop residue when the crop residue is passing through the residue system 104A and/or after the crop residue is output by the residue system 104A. In some examples, the camera(s) 110 capture images of the crop residue at an output of the spreader 104C and/or the chopper 104B of the residue system 104A. In some examples, the camera(s) 110 capture images of portions of the field having crop residue, fertilizer, seeds, etc. spread and/or planted thereon. In some examples, the camera(s) 110 provide one or more of the captured images to the performance monitoring circuitry 102 for use in monitoring performance of one(s) of the systems 104. Additionally or alternatively, the camera(s) 110 can be communicatively coupled to the network 112 to provide the captured images to a cloud-based storage environment, to one or more other vehicles, etc.

In the example of FIG. 1A, the user interface 111 presents information to an operator of the vehicle 100 and/or obtains user input from the operator. In some examples, the user interface 111 includes a display (e.g., an interactive display) to present information associated with the vehicle 100. For example, the display can present a map (e.g., an interactive map) to the operator, where the map associates performance metrics and/or images with one or more corresponding locations at which the performance metrics and/or images were determined and/or obtained. Additionally or alternatively, the display can present a time history (e.g., an interactive time history) associating the performance metrics and/or the images with corresponding times at which the performance metrics and/or images were obtained. In some examples, the user interface 111 can present classifications associated with the performance metrics at the corresponding locations and/or times. In some examples, the user interface 111 selectively displays and/or presents information to the operator based on user input. For example, the user interface 111 can selectively present one(s) of the performance metrics and/or the images based on the user input. In some examples, the user interface 111 can adjust and/or update, based on the user input, one or more of the performance metrics and/or one or more of the classifications. While the user interface 111 is located in a cab of the vehicle 100 in this example, the user interface 111 can be implemented remotely (e.g., at a computer separate from the vehicle 100, on a mobile device, etc.).

In the example of FIG. 1A, the performance monitoring circuitry 102 monitors performance of one or more of the systems 104 by evaluating and/or presenting performance metrics (e.g., job quality parameters) associated with one or more operations (e.g., harvesting, tilling, planting, spraying, etc.) performed by the systems 104. For example, the performance monitoring circuitry 102 determines performance data (e.g., performance metrics and/or classifications) associated with the operations at corresponding locations and/or times. In some examples, the performance monitoring circuitry 102 determines the performance metrics and/or classifications based on image data from the camera(s) 110, sensor data from the sensor(s) 106, and/or user input to the user interface 111. In some examples, the performance monitoring circuitry 102 generates interactive maps and/or time histories for presentation by the user interface 111. For example, the performance monitoring circuitry 102 can generate and/or update the maps and/or time histories to indicate the performance metrics and/or the classifications for corresponding one(s) of the locations and/or times. In some examples, the performance monitoring circuitry 102 can adjust, based on the performance data, one or more example control parameters associated with one(s) of the systems 104. For example, the performance monitoring circuitry 102 can adjust a rotation speed of the chopper 104B, vane positions of the spreader 104C, depth of the tillage tool 104E, etc. In the example of FIG. 1A, the performance monitoring circuitry 102 is communicatively coupled to the example network 112. In some examples, the performance monitoring circuitry 102 can provide, via the network 112, the performance metrics, the classifications, the maps, and/or the time histories to one or more computer systems communicatively coupled to the network 112, to one or more cloud-based storage environments, etc.

In some examples, during an example harvesting operation of the vehicle 100, the performance monitoring circuitry 102 determines performance metrics associated with crop material harvested by the vehicle 100 and/or the crop residue output by the vehicle 100. For example, as the vehicle 100 travels along a field during the harvesting operation, an example header 114 of the vehicle 100 gathers the crop material to be processed by one or more of the systems 104. In such examples, the performance monitoring circuitry 102 determines at least one of a downed crop metric, a yield metric (e.g., a crop yield metric), a debris metric, a grain quality metric, or a crop residue metric associated with the crop material and/or with a portion of the field surrounding the vehicle 100.

In some examples, the downed crop metric represents crop material that is bent and/or flattened (e.g., as a result of high winds and/or inclement weather). For example, the downed crop metric can include a height, a width, and/or an orientation of the downed crop material. In some examples, the performance monitoring circuitry 102 determines the downed crop metric based on first example image(s) (e.g., first context images) of the field in a projected path of the vehicle 100 (e.g., proximate the header 114 of the vehicle 100). For example, the first image(s) can be from first one(s) of the cameras 110 that are forward-facing and/or are positioned to capture scenes external to the vehicle 100. In some examples, the performance monitoring circuitry 102 determines the downed crop metric based on one or more example signals (e.g., characteristic signals) from one(s) of the sensors 106, such as the laser sensor 106C. In some examples, based on the downed crop metric, the performance monitoring circuitry 102 adjusts one or more example actuators of the vehicle 100 to adjust, for example, a head height and/or orientation of the header 114, a position and/or a rotation speed of an example reel of the vehicle 100, a travel speed of the vehicle 100, etc.

In some examples, the yield metric represents an amount of crop material gathered by the vehicle 100. For example, the yield metric can represent a total amount of crop material gathered by the vehicle 100 during the harvesting operation, and/or can represent an amount of crop material gathered per area (e.g., per hectare, etc.). In some examples, the performance monitoring circuitry 102 determines the yield metric based on sensor data from the NDVI sensor 106I, where the sensor data indicates vegetation greenness and/or health of the crop material. In some examples, the performance monitoring circuitry 102 determines the yield metric based on sensor data from the flow sensor 106D, where the sensor data indicates a flow rate (e.g., a mass flow rate) of harvested crop material through one or more subsystems (e.g., a cleaning system and/or other material handling subsystems) of the vehicle 100. In some examples, data from one or more other vehicle sensors (e.g., an impact sensor measuring an impact of the crop material against a surface) can be used by the performance monitoring circuitry 102 to determine the mass flow rate and, thus, determine the yield metric based on the mass flow rate. In some examples, based on the yield metric, the performance monitoring circuitry 102 adjusts one(s) of the actuators of the vehicle 100 to adjust, for example, one or more settings of the vehicle 100 and/or the associated subsystems (e.g., rotor speed and/or position, reel speed and/or position, cleaning system speed settings, header height, etc.).

In some examples, the debris metric represents the presence of rocks and/or other objects (e.g., obstacles, obstructions) in a projected path of the vehicle 100. For example, the debris metric can indicate object type, object size, object shape, distance between the object(s) and the vehicle 100, etc. In some examples, the performance monitoring circuitry 102 determines the debris metric based on the first image(s) representative of the field in the projected path of the vehicle 100. In some examples, the performance monitoring circuitry 102 determines the debris metric based on sensor data from one(s) of the sensors 106, such as the radar sensor 106G and/or the laser sensor 106C. In some examples, based on the debris metric, the performance monitoring circuitry 102 adjusts one(s) of the actuators of the vehicle 100 to adjust, for example, the header height and/or the header orientation of the header 114 to avoid the detected object(s).

In some examples, the grain quality metric represents a characteristic of the crop material harvested by the vehicle 100. For example, the grain quality metric can indicate an amount (e.g., a proportion, a total volume) of high quality grain material (e.g., grain material that is clean and/or unbroken) relative to broken grain and/or material other than grain (MOG) (e.g., straw, chaff, hulls, sticks, etc.) included in the harvested crop material. In some examples, the performance monitoring circuitry 102 determines the grain quality metric based on one or more second example images (e.g., second context image(s)) representing the crop material at one or more locations internal to the vehicle 100. For example, the second image(s) can be from second one(s) of the cameras 110 that are positioned to capture the second image(s) along the grain elevator 104D, a conveyor of the vehicle 100, a grain collecting tank of the vehicle 100, etc. In some examples, based on the grain quality metric, the performance monitoring circuitry 102 adjusts one(s) of the actuators of the vehicle 100 to adjust, for example, rotor speed and/or clearance, cleaning system (e.g., grain cleaning system, cleaning/threshing system) speed and/or clearance, speed of the grain elevator 104D, etc.

In some examples, the crop residue metric represents a length (e.g., an average length, a greatest length, a smallest length, etc.) and/or a spread (e.g., a width of the spread, an area of the spread, etc.) of crop residue processed and/or output by the vehicle 100. In some examples, the performance monitoring circuitry 102 determines the crop residue metric based on image(s) captured by one(s) of the cameras 110. For example, the performance monitoring circuitry 102 determines the crop residue length based on one or more third example images (e.g., third context image(s)) representative of the crop residue at an output of the chopper 104B. In some examples, the performance monitoring circuitry 102 determines the crop residue spread based on one or more fourth example images (e.g., fourth context image(s)) representative of the crop residue at an output of the spreader 104C and/or on a portion of the field (e.g., on a path traversed by the vehicle 100). In some examples, the third image(s) are from third one(s) of the cameras 110 positioned at the output of the chopper 104B, and the fourth image(s) are from fourth one(s) of the cameras 110 that are rearward-facing with respect to the vehicle 100. Additionally or alternatively, the performance monitoring circuitry 102 can determine the crop residue spread based on sensor data from one(s) of the sensors 106, such as the radar sensor 106G and/or the laser sensor 106C. In some examples, based on the crop residue metric, the performance monitoring circuitry 102 adjusts one(s) of the actuators of the vehicle 100 to adjust, for example, distances between the rotating and stationary counter knives 124, 126 of the chopper 104B of FIG. 1B, speed of the crop residue through the chopper 104B and/or the spreader 104C, vane positions of the vanes 128 of the spreader 104C, etc.

In some examples, during an example tilling operation of the vehicle 100, the vehicle 100 travels along a field and performs one or more operations to prepare the field for seeding and/or planting. For example, the vehicle 100 uses the tillage tool 104E to perform the tilling operation, where the tillage tool 104E can include at least one of a harrow, a disk, a hoe, a rotary tiller, etc. In some examples, the tillage tool 104E can be used to overturn and/or loosen soil, remove weeds and/or other debris, etc. In some examples, the performance monitoring circuitry 102 determines performance metrics associated with the field prior to and/or after the tilling operation. For example, the performance monitoring circuitry 102 determines at least one of an example residue size metric, an example residue coverage metric, an example weed presence metric, or an example soil quality metric based on data from one(s) of the sensors 106 and/or the camera(s) 110.

In the example of FIG. 1A, the residue size metric represents a size (e.g., an average length, a greatest length, a smallest length, etc.) associated with residue output on the field during a previous harvesting operation. In some examples, the performance monitoring circuitry 102 determines the residue size metric based on image processing of the fourth image(s) captured by the camera(s) 110, where the fourth image(s) are representative of a portion of the field along a traversed path of the vehicle 100 (e.g., behind the vehicle 100). Additionally or alternatively, the performance monitoring circuitry 102 can determine the residue size metric based on sensor data from, for example, the radar sensor 106G and/or the laser sensor 106C. In some examples, based on the image processing of the fourth image(s), the performance monitoring circuitry 102 determines the residue coverage metric representative of a width of coverage of the residue and/or an area of the coverage of the residue on the field. In some examples, based on the residue size metric and/or the residue coverage metric, the performance monitoring circuitry 102 adjusts one(s) of the actuators of the vehicle 100 to adjust, for example, a depth and/or an angle of the tillage tool 104E used to perform the tilling operation.

In some examples, the weed presence metric represents characteristics of weeds and/or other contaminants in the field. For example, the weed presence metric can indicate presence of weeds in the field, weed location, week type, weed density, etc. In some examples, the performance monitoring circuitry 102 determines the weed presence metric based on image processing of the first image(s) representative of the field in a projected path of the vehicle 100, and/or based on sensor data from one(s) of the sensors 106. In some examples, based on the weed presence metric, the performance monitoring circuitry 102 adjusts one(s) of the actuators of the vehicle 100 to adjust, for example, a depth and/or an angle of the tillage tool 104E used to perform the tilling operation.

In some examples, the soil quality metric represents characteristics of soil in the field. For example, the soil quality metric can indicate size(s) of soil clods, a distribution of the soil clods, soil level, etc. In some examples, the performance monitoring circuitry 102 determines the soil quality metric based on image processing of the fourth image(s) representative of the portion of the field behind the vehicle 100. Additionally or alternatively, the performance monitoring circuitry 102 determines the soil quality metric based on sensor data from one(s) of the sensors 106, such as the laser sensor 106C, the radar sensor 106G, and/or the structured light sensor 106F. In some examples, based on the soil quality metric, the performance monitoring circuitry 102 adjusts one(s) of the actuators (e.g., the position cylinder 104F) of the vehicle 100 to adjust, for example, a position and/or orientation of one or more ground engaging devices (e.g., ground engaging elements) of the vehicle 100. For example, the performance monitoring circuitry 102 can adjust a depth and/or an angle of the tillage tool 104E using the position cylinder 104F associated with the tillage tool 104E. In some examples, the ground engaging device(s) include one or more disks (e.g., disk blades), shovels, shanks, and/or harrows that can engage with and/or operate on the soil in the field.

In some examples, the vehicle 100 can traverse the field to perform an example planting operation thereupon. For example, the vehicle 100 can generate one or more example trenches (e.g., furrows) in the field for planting example seeds therein, where the trenches are generated using the example opener 1041. In some examples, the opener (e.g., furrow opener, trench forming device) 104I includes one or more disks, wedges, hoes, etc. to protrude into the soil and generate the trenches as the vehicle 100 traverses the field. In some examples, prior to generation of the trenches, the cleaner 104H of the vehicle 100 can be used to remove residue and/or other debris from the portion of the field ahead of the opener 104I. For example, the cleaner 104H can include one or more blades and/or wheels to cut through and/or move the debris as the vehicle 100 traverses the field. In some examples, after generation of the trenches, the vehicle 100 can output seeds along corresponding one(s) of the trenches.

In some examples, the performance monitoring circuitry 102 determines performance metrics associated with the planting operation. For example, the performance monitoring circuitry 102 determines at least one of an example trench residue metric, an example seed orientation metric, and example trench quality metric (e.g., a seed bed quality metric), and/or an example soil moisture metric based on data from one(s) of the sensors 106 and/or the camera(s) 110.

In the illustrated example of FIG. 1A, the trench residue metric represents an amount and/or a level of residue and/or other debris in one(s) of the trenches. For example, the performance monitoring circuitry 102 determines the trench residue metric based on image processing of fifth example image(s) from fifth one(s) of the cameras 110, where the fifth one(s) of the cameras 110 are positioned on one or more example row units of the vehicle 100 and/or are directed toward the trenches along which the seeds are planted. In some examples, the fifth image(s) are representative of the trenches along which one or more seeds are planted and/or to be planted. In some examples, based on the trench residue metric, the performance monitoring circuitry 102 adjusts one(s) one or more settings of the example cleaner 104H. For example, the performance monitoring circuitry 102 can adjust an orientation, depth, and/or a rotation speed associated with the cleaner 104H.

In some examples, the performance monitoring circuitry 102 determines the seed orientation metric based on image processing of the fifth image(s), where the seed orientation metric represents an orientation (e.g., an angular orientation relative to the ground or direction of travel) of the seeds planted by the vehicle 100. In some examples, based on the seed orientation metric, the performance monitoring circuitry 102 adjusts one or more settings of the example seed orienter 104G to adjust the orientation of seeds to be planted. Additionally or alternatively, the performance monitoring circuitry 102 determines the trench quality metric based on image processing of the fifth image(s), where the trench quality metric represents characteristics of the trenches and/or the soil therein. For example, the trench quality metric can include furrow depth, furrow width, furrow shape, furrow compaction, soil color, soil composition, seed location and/or spacing, seed count, etc. In some examples, based on the trench quality metric, the performance monitoring circuitry 102 adjusts one or more settings of the opener 104I (e.g., a position and/or an orientation of the opener 104I).

In some examples, the trench depth metric represents depth(s) of one(s) of the trenches in the field. In some examples, the performance monitoring circuitry 102 determines the trench depth metric based on image processing of the fifth image(s), and/or based on sensor data from one(s) of the sensors 106, such as the structured light sensor 106F, the radar sensor 106G, the sonar sensor 106H, etc. In some examples, based on the trench depth metric, the performance monitoring circuitry 102 adjusts one or more settings of the position cylinder 104F to adjust, for example, the depth(s) of one(s) of the trenches.

In some examples, the performance monitoring circuitry 102 determines the soil moisture metric based on image processing of the fifth image(s), and/or based on sensor data from the capacitive sensor 106E and/or other one(s) of the sensors 106. In some examples, the soil moisture metric represents a moisture level of the soil in one(s) of the trenches. In some examples, based on the soil moisture metric, the performance monitoring circuitry 102 adjusts one or more actuators of the vehicle 100 to adjust, for example, a seed depth and/or a down pressure on the seeds planted by the vehicle 100.

In some examples, the vehicle 100 can perform an example spraying procedure in which the sprayer 104J of the vehicle 100 outputs and/or sprays material (e.g., pesticides, fertilizer, and/or other chemicals) onto the field. In some examples, the performance monitoring circuitry 102 determine one or more performance metrics associated with the spray operation. For example, the performance monitoring circuitry 102 can determine at least one of an applied material metric or a weed identification metric associated with the spraying operation. In some examples, the applied material metric represents an amount (e.g., a volume, a mass, a flow rate, etc.) of the material output by one or more nozzles of the sprayer 104J. In some examples, the performance monitoring circuitry 102 determines the applied material metric based on sensor data from one(s) of the sensors 106, such as the flow sensor 106D. For example, the flow sensor 106D can be positioned to measure a flow rate material output by the sprayer 104J of the vehicle 100. In some examples, based on the applied material metric, the performance monitoring circuitry 102 can adjust one(s) of the nozzles associated with the sprayer 104J to adjust the amount of material deposited onto the field.

In some examples, the weed identification metric represents weed presence, weed location, weed type, and/or weed intensity corresponding to the field. In some examples, the performance monitoring circuitry 102 determines the weed identification metric based on one or more sixth example images (e.g., sixth context image(s)) from sixth one(s) of the cameras 110, where the sixth one(s) of the cameras 110 can be forward-facing and/or positioned on the boom of the vehicle 100. In some examples, based on the weed identification metric, the performance monitoring circuitry 102 adjusts the nozzle(s) of the sprayer 104J to adjust the amount of material output therefrom.

While performance metrics such as the downed crop metric, the yield metric, the debris metric, the grain quality metric, the crop residue metric, the residue size metric, the residue coverage metric, the weed presence metric, the soil quality metric, the trench residue metric, the seed orientation metric, the trench quality metric, the soil moisture metric, the applied material metric, and/or the weed identification metric are described in the example of FIG. 1A, one or more different performance metrics can additionally or alternatively be determined by the performance monitoring circuitry 102.

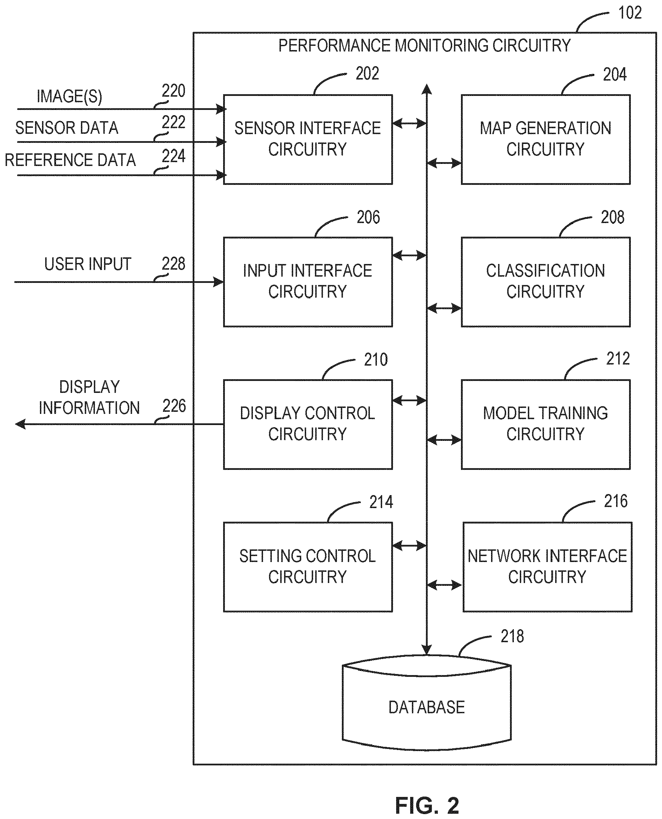

FIG. 2 is a block diagram of an example implementation of the performance monitoring circuitry 102 of FIG. 1A to monitor one or more performance metrics associated with the vehicle 100. The performance monitoring circuitry 102 of FIG. 2 may be instantiated (e.g., creating an instance of, bring into being for any length of time, materialize, implement, etc.) by programmable circuitry such as a Central Processor Unit (CPU) executing first instructions. Additionally or alternatively, the performance monitoring circuitry 102 of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

In the illustrated example of FIG. 2, the performance monitoring circuitry 102 includes example sensor interface circuitry 202, example map generation circuitry 204, example input interface circuitry 206, example classification circuitry 208, example display control circuitry 210, example model training circuitry 212, example setting control circuitry 214, example network interface circuitry 216, and an example database 218.

The example database 218 stores data utilized and/or obtained by the performance monitoring circuitry 102. The example database 218 of FIG. 2 is implemented by any memory, storage device and/or storage disc for storing data such as, for example, flash memory, magnetic media, optical media, solid state memory, hard drive(s), thumb drive(s), etc. Furthermore, the data stored in the example database 218 may be in any data format such as, for example, binary data, comma delimited data, tab delimited data, structured query language (SQL) structures, etc. While, in the illustrated example, the example database 218 is illustrated as a single device, the example database 218 and/or any other data storage devices described herein may be implemented by any number and/or type(s) of memories.

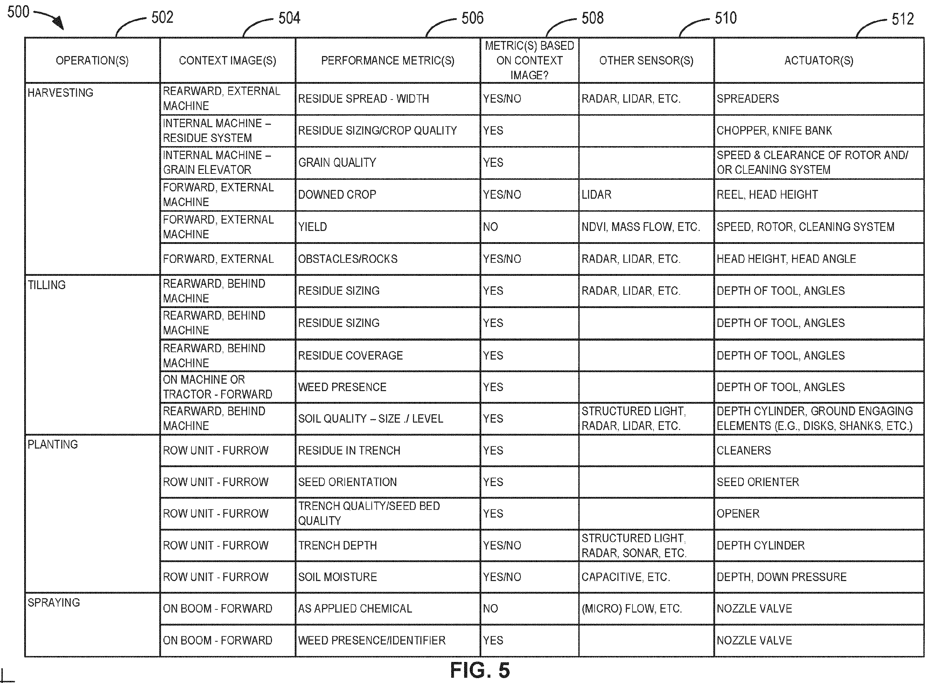

The example sensor interface circuitry 202 obtains and/or retrieves data from the example camera(s) 110 and/or the example sensor(s) 106 of FIG. 1A. For example, the sensor interface circuitry 202 obtains one or more example images (e.g., video frames) 220 captured by the example camera(s) 110 of FIG. 1A. In some examples, the images 220 include the first image(s) representative of the field in the projected path of the vehicle 100, the second image(s) representative of a scene along or internal to one or more subsystems of the vehicle 100 (e.g., the grain elevator 104D, a conveyor of the vehicle 100, a grain collecting tank of the vehicle 100, etc.), the third image(s) representative of an output of the chopper 104B, the fourth image(s) representative of a rearward-facing scene with respect to the vehicle 100, the fifth image(s) representative of one or more trenches along which seeds are planted, and/or the sixth image(s) representative of a forward-facing scene from a boom of the vehicle 100. In this example, the sensor interface circuitry 202 obtains example sensor data 222 from one or more of the sensors 106 of FIG. 1A. In some examples, the sensor data 222 can include data from one or more remote sensors external to the vehicle 100 (e.g., sensors implemented on a different vehicle, sensors implemented at a base station, etc.). In the example of FIG. 2, the sensor interface circuitry 202 obtains example reference data 224 from one or more of the sensor(s) 106 and/or from a computer system of the vehicle 100. For example, the reference data 224 can include location data (e.g., GPS data) from a GPS (e.g., the position sensor 106B) implemented on the vehicle 100. In some examples, the reference data 224 can include time data from a timer implemented in the computer system of the vehicle 100. In some examples, the sensor interface circuitry 202 causes storage of the time data in association with the corresponding image(s) 220 and/or the sensor data 222 in the database 218 of FIG. 2. In some examples, the sensor interface circuitry 202 is instantiated by programmable circuitry executing sensor interface circuitry instructions and/or configured to perform operations such as those represented by the flowchart(s) of FIG. 5.

In the illustrated example of FIG. 2, the classification circuitry 208 determines one or more classifications (e.g., ratings) associated with one(s) of the image(s) 220. For example, the classification circuitry 208 can determine the classification(s) based on one or more performance metrics determined for the corresponding image(s) 220. In some examples, the performance metrics include a length (e.g., an average length, a greatest length, a smallest length, etc.) of crop residue represented in the corresponding image(s) 220, a distribution (e.g., a width of spread, an area of the spread) of the crop residue represented in the corresponding image(s) 220, an amount of crop material harvested by the vehicle 100, etc.

In some examples, the classification circuitry 208 determines the performance metrics based on image processing and/or optical analysis of the corresponding image(s) 220. For example, to determine the crop residue metric(s), the classification circuitry 208 analyzes the image(s) 220 to detect one or more pieces (e.g., straw pieces, chaff pieces, etc.) of the crop residue represented in the image(s) 220. In some examples, the classification circuitry 208 executes one or more neural network models (e.g., residue length detection model(s)) based on the image(s) 220 to detect the piece(s) of the crop residue in the image(s) 220 and/or to determine length(s) of the respective piece(s) of the crop residue. In some examples, as a result of the execution of the residue length detection model(s), the classification circuitry 208 determines an average length of the pieces of crop residue, a greatest length of the pieces of crop residue, and/or a smallest length of the pieces of crop residue for respective one(s) of the image(s) 220. In some examples, the classification circuitry 208 can determine a count of the crop residue pieces corresponding to a particular length and/or range of lengths. In some examples, the neural network model(s) do not detect individual piece(s) of the crop residue and/or the corresponding length(s), and instead classify the image(s) 220 based on characteristic(s) (e.g., texture, shading, etc.) of the image(s) 220.

In some examples, when the image(s) 220 are representative of a portion of a field surrounding the vehicle 100, the classification circuitry 208 analyzes the image(s) 220 to determine the spread (e.g., a distribution) of the crop residue across the portion of the field. For example, the classification circuitry 208 can execute one or more neural network models (e.g., residue spread detection model(s)) based on the image(s) 220 to determine a parameter (e.g., a width, an area) of the spread of the crop residue represented in the image(s) 220. In some examples, as a result of the execution of the residue spread detection model(s), the classification circuitry 208 determines a width of the spread of crop residue across the portion of the field and/or an area (e.g., a geographic area) of the spread of crop residue. In some examples, the classification circuitry 208 can determine a coverage percentage of the crop residue on the portion of the field, where the coverage percentage corresponds to an area of the crop residue relative to an area of the portion of the field represented in the image(s) 220.

In some examples, the classification circuitry 208 can execute one or more different neural network models to determine remaining one(s) of the performance metrics (e.g., the downed crop metric, the debris metric, the grain quality metric, the crop residue metric, the residue size metric, the residue coverage metric, the weed presence metric, the soil quality metric, the trench residue metric, the seed orientation metric, the trench quality metric, the soil moisture metric, the weed identification metric, etc.) based on corresponding one(s) of the images 220. Additionally or alternatively, the classification circuitry 208 determines one or more of the performance metrics based on the sensor data 222 from one or more of the sensors 106. For example, the sensor data 222 can include signal(s) representative of one or more objects (e.g., rocks and/or other debris) in an environment of the vehicle 100, residue on the field traversed by the vehicle 100, soil characteristics (e.g., moisture level, etc.) of the field, trench dimensions (e.g., width and/or depth), etc.. In some examples, the classification circuitry 208 can determine one or more of the performance metrics based on the signal(s).

In some examples, the classification circuitry 208 determines, based on the determined performance metric(s), one or more classifications for corresponding one(s) of the image(s) 220. For example, the classifications can be indicative of crop residue quality (e.g., whether the crop residue is underprocessed, overprocessed, and/or satisfactory) and/or can be indicative of performance of the example residue system 104A of FIG. 1A. In some examples, the classifications can be representative of one or more other performance metrics (e.g., grain quality, soil quality, trench quality, etc.) determined by the classification circuitry 208. In some examples, the classification circuitry 208 determines the classifications for respective ones of the images 220 by comparing the associated performance metric(s) to one or more classification thresholds.

In one example, the classification circuitry 208 determines that the crop residue represented in first one(s) of the image(s) 220 is underprocessed when the associated crop residue metrics do not satisfy one or more first classification thresholds. For example, the classification circuitry 208 determines that the crop residue in the first one(s) of the image(s) 220 is underprocessed when the average crop length and/or the greatest crop length does not satisfy (e.g., is greater than) a first threshold length, when the spread width of the crop residue does not satisfy (e.g., is less than) a first threshold width, and/or when the spread area of the crop residue does not satisfy (e.g., is less than) a first threshold area.

In some examples, the classification circuitry 208 determines that the crop residue in one or more second one(s) of the image(s) 220 is overprocessed when the associated crop residue metrics do not satisfy one or more second classification thresholds. For example, the classification circuitry 208 determines that the crop residue in the second one(s) of the image(s) 220 is overprocessed when the average crop length and/or the greatest crop length does not satisfy (e.g., is less than) a second threshold length, when the spread width of the crop residue does not satisfy (e.g., is greater than) a second threshold width, and/or when the spread area of the crop residue does not satisfy (e.g., is greater than) a second threshold area.

In some examples, the classification circuitry 208 determines that the crop residue in one or more third one(s) of the image(s) 220 is satisfactory (e.g., neither overprocessed nor underprocessed) when the associated crop residue metrics satisfy one or more of the first and second classification thresholds. For example, the classification circuitry 208 determines that the crop residue in the third one(s) of the image(s) 220 is satisfactory when the average crop length and/or the greatest crop length satisfies (e.g., is less than or equal to) the first threshold length and/or satisfies (e.g., is greater than or equal to) the second threshold length. In some examples, the classification circuitry 208 determines that the crop residue in the third one(s) of the image(s) 220 is satisfactory when the spread width of the crop residue satisfies (e.g., is greater than or equal to) the first threshold width and/or satisfies (e.g., is less than or equal to) the second threshold width. In some examples, the classification circuitry 208 determines that the crop residue in the third one(s) of the image(s) 220 is satisfactory when the spread area of the crop residue satisfies (e.g., is greater than or equal to) the first threshold area and/or satisfies (e.g., is less than or equal to) the second threshold area. While three of the classifications (e.g., underprocessed, overprocessed, or satisfactory) are used in this example, different numbers and/or types of classifications (e.g., underprocessed or satisfactory, overprocessed or satisfactory, etc.) can be used instead.

In some examples, different classification thresholds can be used to determine classifications based on corresponding one(s) of the performance metrics. For example, the classification circuitry 208 can determine grain quality classification(s) (e.g., high grain quality, low grain quality, etc.) for grain harvested by the vehicle 100 and/or represented in one(s) of the images 220. In some examples, the classification circuitry 208 determines the grain quality classification(s) by comparing the grain quality metric(s) (e.g., a total volume of the clean and/or unbroken grain material represented in the image(s) 220, a proportion of the clean and/or unbroken grain material relative to broken grain and/or MOG represented in the image(s) 220, etc.) to one or more example grain quality thresholds. For example, the classification circuitry 208 determines that the grain has a high grain quality when an amount (e.g., a proportion, a total volume, etc.) of the clean and/or unbroken grain material satisfies (e.g., is at or above) a first example grain quality threshold. Conversely, in some examples, the classification circuitry 208 determines grain has a low grain quality when the amount of the clean and/or unbroken grain material does not satisfy (e.g., is less than) the first grain quality threshold and/or a second grain quality threshold (e.g., different from the first grain quality threshold).

In some examples, the classification circuitry 208 can determine trench quality classification(s) (e.g., satisfactory, unsatisfactory, etc.) for one or more example trenches (e.g., furrows) represented in one(s) of the images 220. In some examples, the classification circuitry 208 determines the trench quality classification(s) by comparing the one(s) of the trench quality metrics (e.g., trench depth, trench width, trench shape, trench compaction, soil color, soil composition, seed location, seed spacing, seed count, etc.) to one or more example trench quality thresholds. For example, the classification circuitry 208 determines that a trench is satisfactory when one(s) of the trench quality metrics satisfy corresponding first trench quality threshold(s) (e.g., a first trench depth threshold, a first trench width threshold, etc.). Conversely, in some examples, the classification circuitry 208 determines the trench is unsatisfactory when the one(s) of the trench quality metrics do not satisfy the first trench quality threshold(s) and/or one or more second trench quality thresholds (e.g., a second trench depth threshold, a second trench width threshold, etc.).

While classification(s) based on crop residue metric(s), grain quality metric(s), and/or trench quality metric(s) are described above, one or more different classifications (e.g., downed crop classification(s), debris classification(s), residue size classification(s), residue coverage classification(s), weed presence classification(s), soil quality classification(s), trench residue classification(s), seed orientation classification(s), soil moisture classification(s), weed identification classification(s), etc.) can be determined for one or more of images 220 based on comparison of the performance metric(s) to corresponding classification threshold(s). For example, the classification circuitry 208 can determine multiple classifications for one(s) of the images 220 based on different one(s) of the performance metrics. In one example, for a particular one of the images 220, the classification circuitry 208 can determine a first classification based on the crop residue length, a second classification based on the residue spread width, and/or a third classification based on the residue spread area. In some examples, the classification circuitry 208 can determine an aggregate classification based on a combination of the multiple classifications for the particular image 220. In some examples, the classification circuitry 208 causes storage of the performance metrics and/or the classifications in association with the corresponding image(s) 220 in the example database 218.

In some examples, the classification circuitry 208 determines the classifications based on one or more neural network model(s) (e.g., classification model(s)). For example, the classification circuitry 208 executes the classification model(s) based on one(s) of the image(s) 220 and/or based on the sensor data 222 to determine the associated classification(s). In some examples, the classification model(s) are trained based on labeled training data including images of processed residue, harvested grain, trenches in a field, etc. and associated classification labels.

In some examples, the classification circuitry 208 determines confidence levels for corresponding ones of the classifications. For example, the confidence levels represent a likelihood that the classifications are accurate and/or correct for the corresponding images 220. In some examples, the classification circuitry 208 determines the confidence levels based on differences between the one or more of the performance metrics and the corresponding classification threshold(s). For example, when a difference between one(s) of the classification thresholds and the corresponding performance metric(s) for a particular one of the images 220 is relatively small (e.g., less than ±10%, less than ±5%, less than ±2%, etc.), the classification circuitry 208 determines that one or more of the classifications for the particular one of the images 220 are associated with a low confidence level. Conversely, when the difference between the one(s) of the classification thresholds and the corresponding performance metric(s) is relatively large (e.g., at least ±10%, at least ±5%, at least ±2%, etc.), the classification circuitry 208 determines that the corresponding classification(s) for the particular one of the images 220 are associated with a high confidence level.

In some examples, the classification circuitry 208 can determine multiple confidence levels corresponding to multiple classifications for an image. For example, for one of the images 220 representative of a projected path of the vehicle, the classification circuitry 208 can determine a first confidence level associated with a soil quality classification and/or a second confidence level associated with a trench quality classification, where the first and second confidence levels can be different. In some examples, the classification circuitry 208 stores the confidence levels in association with the classifications in the database 218. In some examples, the classification circuitry 208 is instantiated by programmable circuitry executing classification circuitry instructions and/or configured to perform operations such as those represented by the flowchart(s) of FIGS. 6 and/or 7.

In the illustrated example of FIG. 2, the model training circuitry 212 generates and/or trains one or more models (e.g., neural network model(s)) utilized by the classification circuitry 208. For example, the model training circuitry 212 generates and/or trains one or more of the classification model(s), the residue length detection model(s), and/or the residue spread detection model(s), and/or one or more performance metric detection models (e.g., grain quality detection model(s), trench quality detection model(s), etc.) utilized by the classification circuitry 208.

The example model training circuitry 212 performs training of the neural network(s) implemented by the classification circuitry 208. In the example of FIG. 2, training data can be stored in the database 218 and can include a threshold number (e.g., hundreds, thousands) of reference images with labels indicating, for example, classification(s) (e.g., underprocessed crop residue, high grain quality, etc.) and/or corresponding performance metric(s) (e.g., an average residue length, a residue spread width, a residue spread area, context characteristics, etc.) For example, the context characteristics can indicate whether the reference images represent a ground, a location internal to and/or external to the vehicle 100, and/or one or more other objects (e.g., rocks, protrusions, etc.). In some examples, the model training circuitry 212 sub-divides the training data into a training data set and a validation data set. For example, a first portion (e.g., 80%) of the training data can be used as the training data set for training the neural network model(s), and a second portion (e.g., 20%) of the training data can be used as the validation data set for validating the neural network model(s).

In some examples, the model training circuitry 212 trains one or more neural networks(s) based on the labeled classifications, the reference images, and/or the performance metrics (e.g., the average residue length, the residue spread width, the residue spread area, the trench depth, the trench width, etc.) from the training data set. For example, the model training circuitry 212 correlates the classifications with the corresponding performance metrics and/or with detected features in the reference images from the training data set, and adjusts parameters of the neural network(s) based on the correlation. In particular, the model training circuitry 212 adjusts the parameters such that the neural network(s) output the labeled classifications when the performance metrics and/or the reference images from the training data set are provided as inputs to the neural network(s). In some examples, the one or more classification model(s) are generated as a result of the neural network training.

In some examples, the model training circuitry 212 validates the classification model(s) based on the second portion of the training data (e.g., the validation data set). For example, the model training circuitry 212 evaluates the classification model(s) based on the validation data set. In such examples, the model training circuitry 212 determines classifications by providing the reference images and/or the performance metrics from the validation data set as input to the trained classification model(s). In some examples, the model training circuitry 212 compares the determined classifications to corresponding reference classifications from the validation data set.

In some examples, the model training circuitry 212 determines whether the determined classifications satisfy an accuracy threshold by comparing the determined classifications to the corresponding reference classifications from the validation data set. For example, the model training circuitry 212 determines that the determined classifications do not satisfy the accuracy threshold when the determined classifications correctly predict less than a threshold percentage (e.g., less than 90%, less than 95%, etc.) of the corresponding reference classifications. Conversely, the model training circuitry 212 determines that the determined classifications satisfy the accuracy threshold when the determined classifications correctly predict at least the threshold percentage (e.g., at least 90%, at least 95%, etc.) of the corresponding reference classifications. In some examples, the model training circuitry 212 re-trains the classification model(s) when the determined classifications do not satisfy the accuracy threshold. In some examples, when the determined classifications satisfy the accuracy threshold, the model training circuitry 212 stores the trained classification model(s) in the database 218 for use by the classification circuitry 208. In some examples, the model training circuitry 212 is instantiated by programmable circuitry executing model training circuitry instructions and/or configured to perform operations such as those represented by the flowchart(s) of FIGS. 6 and/or 7.

Artificial intelligence (AI), including machine learning (ML), deep learning (DL), and/or other artificial machine-driven logic, enables machines (e.g., computers, logic circuits, etc.) to use a model to process input data to generate an output based on patterns and/or associations previously learned by the model via a training process. For instance, the model may be trained with data to recognize patterns and/or associations and follow such patterns and/or associations when processing input data such that other input(s) result in output(s) consistent with the recognized patterns and/or associations.

Many different types of machine learning models and/or machine learning architectures exist. In examples disclosed herein, machine learning models based on Long Short-Term Memory (LSTM) architectures are used. In general, machine learning models/architectures that are suitable to use in the example approaches disclosed herein will be convolutional neural networks (CNNs). However, other types of machine learning models could additionally or alternatively be used.

In general, implementing a ML/Al system involves two phases, a learning/training phase and an inference phase. In the learning/training phase, a training algorithm is used to train a model to operate in accordance with patterns and/or associations based on, for example, training data. In general, the model includes internal parameters that guide how input data is transformed into output data, such as through a series of nodes and connections within the model to transform input data into output data. Additionally, hyperparameters are used as part of the training process to control how the learning is performed (e.g., a learning rate, a number of layers to be used in the machine learning model, etc.). Hyperparameters are defined to be training parameters that are determined prior to initiating the training process.

Different types of training may be performed based on the type of ML/AI model and/or the expected output. For example, supervised training uses inputs and corresponding expected (e.g., labeled) outputs to select parameters (e.g., by iterating over combinations of select parameters) for the ML/Al model that reduce model error. As used herein, labelling refers to an expected output of the machine learning model (e.g., a classification, an expected output value, etc.). Alternatively, unsupervised training (e.g., used in deep learning, a subset of machine learning, etc.) involves inferring patterns from inputs to select parameters for the ML/AI model (e.g., without the benefit of expected (e.g., labeled) outputs).

In some examples disclosed herein, ML/AI models are trained using stochastic gradient descent. However, any other training algorithm may additionally or alternatively be used. In examples disclosed herein, training is performed until a targeted accuracy level is reached (e.g., >95%). Training is performed using hyperparameters that control how the learning is performed (e.g., a learning rate, a number of layers to be used in the machine learning model, etc.). In some examples, pre-trained model(s) are used. In some examples re-training may be performed. Such re-training may be performed in response to, for example, poor performance metric detection due to, for instance, low ambient lighting.

Training is performed using training data. Because supervised training is used, the training data is labeled. In examples disclosed herein, the training data originates from a threshold number (e.g., hundreds, thousands) of reference images labeled with associated classifications (e.g., underprocessed crop residue, overprocessed crop residue, high quality grain, low quality grain, etc.) and/or performance metrics (average residue length, residue spread width, residue spread area, trench depth, trench width, etc.). Labeling can be applied to the training data by the operator of the vehicle 100, where the labeling includes identifying a classification for the underlying reference images.

Once training is complete, the model is deployed for use as an executable construct that processes an input and provides an output based on the network of nodes and connections defined in the model. In examples disclosed herein, the model(s) are stored in the database 218. The model(s) may then be executed by the classification circuitry 208 of FIG. 2.

Once trained, the deployed model may be operated in an inference phase to process data. In the inference phase, data to be analyzed (e.g., live data) is input to the model, and the model executes to create an output. This inference phase can be thought of as the AI "thinking" to generate the output based on what it learned from the training (e.g., by executing the model to apply the learned patterns and/or associations to the live data). In some examples, input data undergoes pre-processing before being used as an input to the machine learning model. Moreover, in some examples, the output data may undergo post-processing after it is generated by the AI model to transform the output into a useful result (e.g., a display of data, an instruction to be executed by a machine, etc.).

In some examples, output of the deployed model may be captured and provided as feedback. By analyzing the feedback, an accuracy of the deployed model can be determined. If the feedback indicates that the accuracy of the deployed model is less than a threshold or other criterion, training of an updated model can be triggered using the feedback and an updated training data set, hyperparameters, etc., to generate an updated, deployed model.

Referring to FIG. 2, the map generation circuitry 204 generates one or more maps (e.g., interactive maps) based on the image(s) 220, the reference data 224, the performance metrics, and/or the classifications determined by the classification circuitry 208. For example, the map generation circuitry 204 generates the map(s) by associating the image(s) 220 and at least one of the performance metric(s) or the classification(s) with the corresponding reference data 224.

In some examples, the map generation circuitry 204 generates one or more example geographic maps (e.g., location maps) by associating the image(s) 220, the performance metric(s), and/or the classification(s) with corresponding geographic locations of the vehicle 100 at which the image(s) 220 were captured. For example, for one(s) of the geographic locations of the vehicle 100 represented in the reference data 224, the resulting geographic map(s) indicate one(s) of the images 220 captured at the geographic location(s), the performance metric(s) determined for the one(s) of the images 220, the classification(s) determined for the one(s) of the images 220, etc.

Additionally or alternatively, the map generation circuitry 204 generates one or more time plots (e.g., time histories) by associating the image(s) 220, the performance metric(s), and/or the classification(s) with corresponding times at which the image(s) 220 were captured. For example, for one(s) of the times represented in the reference data 224, the resulting time plot(s) indicate one(s) of the images 220 captured at the corresponding time(s), the performance metric(s) determined for the one(s) of the images 220, the classification(s) determined for the one(s) of the images 220, etc.

In some examples, the map generation circuitry 204 can include filtered and/or modified values for the performance metric(s) in the map(s) and/or the plot(s). For example, the map generation circuitry 204 can average the values of the performance metrics across multiple ones of the images 220 to reduce noise in the performance metrics. In some examples, the map generation circuitry 204 stores the filtered and/or averaged values (e.g., in addition to or instead of the unfiltered performance metrics) in association with the corresponding images 220, geographic location(s), and/or time(s). In some examples, when an operator selects one(s) of the geographic location(s) and/or the time(s), the filtered values are presented to the operator via the user interface 111 of FIG. 1 along with one(s) of the images 220 associated with the filtered value(s) for the selected location(s) and/or time(s).

In some examples, the map generation circuitry 204 generates and/or updates the map(s) during and/or after one or more operations (e.g., harvesting operations, tilling operations, planting operations, spraying operations, etc.) of the vehicle 100 on a field. For example, the map generation circuitry 204 can periodically update the map(s) to include new images, new performance metrics, and/or new classifications obtained for different locations and/or times at which the vehicle 100 has operated. In some examples, the map generation circuitry 204 generates the map(s) after completion of the operation. In some examples, the map generation circuitry 204 provides the one or more map(s) (e.g., the geographic map(s) and/or the time plot(s)) to the database 218 for storage therein. In some examples, the map generation circuitry 204 is instantiated by programmable circuitry executing map generation circuitry instructions and/or configured to perform operations such as those represented by the flowchart(s) of FIGS. 6 and/or 7.

In the example of FIG. 2, the display control circuitry 210 controls presentation of the one or more maps (e.g., the geographic map(s) and/or the time plot(s)) to an operator of the vehicle 100 and/or to a remote operator. For example, the display control circuitry 210 generates and/or provides example display information (e.g., interactive display information) 226 to the example user interface 111 of FIG. 1A for presentation thereon. In some examples, the display information 226 includes at least one of the maps and/or one or more portions of the map(s), one or more of the image(s) 220, one or more of the classifications, and/or one or more of the performance metrics to be presented to the operator. In some examples, the display control circuitry 210 provides the display information 226 to a remote device communicatively coupled to the performance monitoring circuitry 102 (e.g., via the network 112 of FIG. 1A). In some examples, the remote device can include a mobile device, a computer, a display device, etc. In some examples, the display control circuitry 210 adjusts, based on example user input 228, the display information 226 to be presented. For example, the display control circuitry 210 adjusts the display information 226 to present different portions of the map(s), enlarge and/or reduce portions of the map(s), display selected one(s) of the image(s) 220, etc. In some examples, the display control circuitry 210 is instantiated by programmable circuitry executing display control circuitry instructions and/or configured to perform operations such as those represented by the flowchart(s) of FIGS. 6 and/or 7.

In the illustrated example of FIG. 2, the input interface circuitry 206 obtains the example user input 228 provided by the operator of the vehicle 100. For example, the user input 228 may be provided by the operator via the example user interface 111 of FIG. 1A. In some examples, the operator can select, via the user input 228, one(s) of the images 220 to be presented by the user interface 111. In some examples, the operator can select the one(s) of the images 220 by selecting, via the user interface 111, one or more of the locations (e.g., represented in the geographic map(s)) and/or one or more of the times (e.g., represented in the time plot(s)). In such examples, based on the user input 228, the display control circuitry 210 adjusts the display information 226 to present the one(s) of the images 220 corresponding to the selected location(s) and/or time(s). In some such examples, the display control circuitry 210 causes the user interface 111 to present the classifications, the confidence levels, and/or the performance metrics associated with the selected image(s) 220.

In some examples, the operator can select the one(s) of the images 220 by selecting, via the user interface 111, one or more of the classifications, one or more values for the performance metrics, and/or one or more of the confidence levels. In such examples, the display control circuitry 210 adjusts the display information 226 to present the one(s) of the images 220 corresponding to the selected classification(s), the selected value(s) of the performance metrics, and/or the selected confidence level(s). In some examples, the operator can select a combination of the location(s), the time(s), the classification(s), the performance metric(s), and/or the confidence level(s), and the display control circuitry 210 causes the user interface 111 to present one(s) of the images 220 corresponding to the selected combination.

In some examples, the operator can confirm and/or adjust, via the user interface 111, one(s) of the classifications and/or one(s) of the performance metrics for corresponding one(s) of the image(s) 220. In some examples, the display control circuitry 210 requests the operator to confirm one(s) of the classifications assigned to the one(s) of the images 220. For example, the display control circuitry 210 identifies one(s) of the classification having a low confidence level, and causes the user interface 111 to present the classification(s) along with the associated one(s) of the images 220. In such examples, the display control circuitry 210 presents, via the user interface 111, an option to the operator to one of confirm or change the classification(s). In some examples, in response to the operator confirming the classification(s), the classification circuitry 208 updates the confidence level(s) of the classification(s) to a high confidence level.

In some examples, in response to the operator adjusting one(s) of the classifications and/or one(s) of the performance metrics, the classification circuitry 208 updates (e.g., automatically updates) the corresponding classification(s) and/or the performance metric(s) stored in the database 218 and/or included in the display information 226 presented by the user interface 111. For example, when the operator updates and/or changes the classification for one of the images 220, the classification circuitry 208 identifies second one(s) of the images 220 that have similar performance metrics compared to the first one of the images 220, and the classification circuitry 208 similarly updates the classifications of the second one(s) of the images 220. In some examples, the model training circuitry 212 re-trains one or more neural network models based on the updated classification(s) and/or the updated performance metric(s). For example, the model training circuitry 212 can include the updated classification(s) and/or confirmed classification(s), along with associated one(s) of the images 220, as new training data for the classification model(s), and trains and/or re-trains the classification model(s) based on the new training data.

In some examples, the classification circuitry 208 adjusts one or more of the classification thresholds based on the updated classification(s) selected by the operator. For example, when the operator changes and/or selects the classification for one of the images 220, the classification circuitry 208 updates the classification threshold(s) such that the updated classification satisfies the classification threshold(s). Stated differently, the classification circuitry 208 adjusts the classification threshold(s) such that the classification circuitry 208 outputs the user-selected classification when the associated one of the images 220 is evaluated based on the classification threshold(s). In some examples, the classification circuitry 208 adjusts the classification threshold(s) in response to the operator changing at least a threshold number (e.g., one, five, ten, twenty, etc.) of the classification(s). In some examples, the operator can adjust one(s) of the classification threshold(s) based on the user input 228 to the input interface circuitry 206. In some examples, after adjustment of the classification threshold(s), the classification circuitry 208 re-evaluates the classification(s) for one(s) of the images 220 based on the updated classification threshold(s). In some examples, the input interface circuitry 206 is instantiated by programmable circuitry executing input interface circuitry instructions and/or configured to perform operations such as those represented by the flowchart(s) of FIG. 6.

In the illustrated example of FIG. 2, the setting control circuitry 214 determines whether one or more vehicle control settings are to be adjusted based on the classification(s) and/or the performance metric(s). In some examples, the vehicle control settings include at least one of a chopper speed of the example residue system 104A of FIG. 1A, counter knife positions of the residue system 104A, vane positions of the residue system 104A, speed at which the spreader outputs the crop residue, travel speed of the vehicle 100, speed and/or clearance of a cleaning system (e.g., a grain cleaning system, a cleaning/threshing system, etc.) of the vehicle 100, height and/or orientation of the header 114, position and/or rotation speed of an example reel of the vehicle 100, speed of the grain elevator 104D, depth and/or angle of the tillage tool 104E, etc. In some examples, the setting control circuitry 214 directs one(s) of the vehicle systems 104 to adjust one(s) of the vehicle control settings in response to determining that the crop residue is overprocessed and/or underprocessed at one or more locations and/or times. For example, in response to determining that the crop residue is overprocessed and/or underprocessed for a threshold duration (e.g., the previous 3 seconds, the previous 10 seconds, etc.) for which the vehicle 100 operates on a field, the setting control circuitry 214 directs the residue system 104A to adjust the one(s) of the vehicle control settings. In some examples, in response to determining that the crop residue is overprocessed and/or underprocessed for a threshold distance (e.g., the previous 5 meters, the previous 10 meters, etc.) travelled by vehicle 100, the setting control circuitry 214 directs the residue system 104A to adjust the one(s) of the vehicle control settings. In some examples, the setting control circuitry 214 is instantiated by programmable circuitry executing setting control circuitry instructions and/or configured to perform operations such as those represented by the flowchart(s) of FIG. 5.

In the illustrated example of FIG. 2, the network interface circuitry 216 provides and/or obtains information via the example network 112 of FIG. 1A. For example, the network interface circuitry 216 can provide information generated and/or obtained by the performance monitoring circuitry 102 (e.g., the image(s) 220, the sensor data 222, the reference data 224, the geographic map(s), the time plot(s), the performance metric(s), the classification(s), the classification model(s), etc.) to one or more cloud-based environments for storage therein. In some examples, the network interface circuitry 216 is communicatively coupled to one or more devices (e.g., mobile device(s), computer(s)) via the network 112. In some such examples, the network interface circuitry 216 can provide the information to the device(s) for storage and/or presentation thereon, and/or can obtain user input from the device(s) to adjust and/or confirm the classification(s), to adjust one or more of the classification thresholds, etc. In some examples, the network interface circuitry 216 is instantiated by programmable circuitry executing network interface circuitry instructions and/or configured to perform operations such as those represented by the flowchart(s) of FIGS. 6 and/or 7.

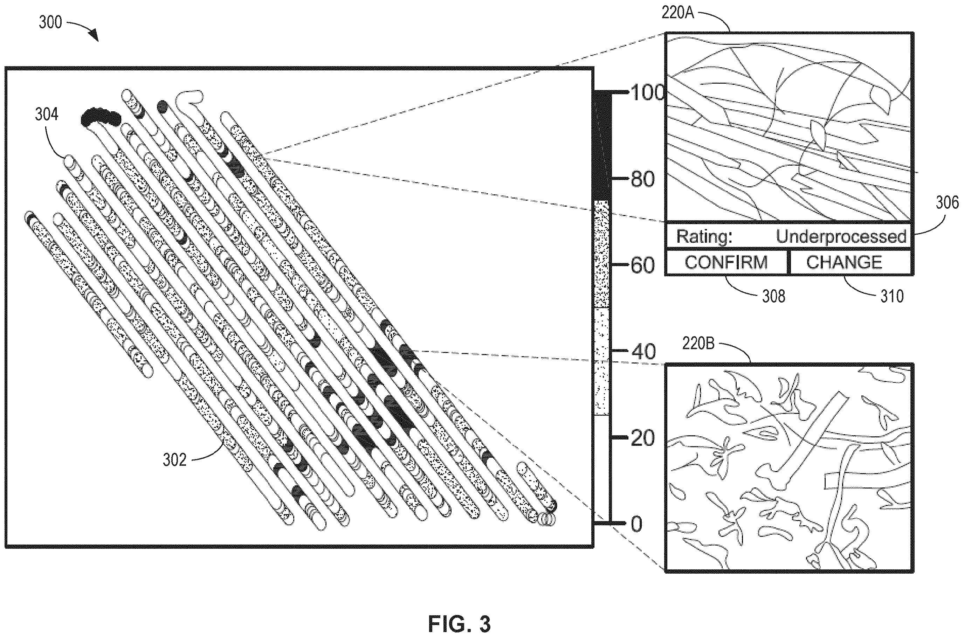

FIG. 3 illustrates a first example map (e.g., a geographic map) 300 generated by the example performance monitoring circuitry 102 of FIGS. 1A and/or 2. In some examples, the first map 300 is generated by the example map generation circuitry 204 of FIG. 2 and presented to an operator of the vehicle 100 of FIG. 1A during operation of the vehicle 100. In the illustrated example of FIG. 3, the first map 300 associates locations of the vehicle 100 with corresponding performance information (e.g., one(s) of the images 220, the performance metrics, the classifications, and/or the confidence levels) captured and/or determined for the locations. In the example of FIG. 3, the performance information is obtained as the vehicle 100 traverses example rows 302 on a field.

In some examples, the performance information for the different locations is represented by corresponding markers (e.g., points, dots) 304 on the first map 300. In some examples, the performance information at a particular location is represented by a characteristic (e.g., a color, a shape, a size, a brightness, a pattern, etc.) of the corresponding marker 304. In FIG. 3, for example, colors of the markers 304 represent chop quality (e.g., average residue length in millimeters) of the crop residue at the corresponding locations, where darker colors indicate greater average residue length. In some examples, the colors of the markers 304 indicate the classifications of the crop residue and/or one or more other performance metrics. In this example, a first color of the markers 304 can indicate the crop residue is underprocessed or overprocessed, and a second color of the markers 304 can indicate that the crop residue is satisfactory. Additionally or alternatively, the first color of the markers 304 can indicate a first classification associated with one(s) of the performance metrics, and the second color of the markers 304 can indicate a second classification (e.g., different from the first classification) associated with the one(s) of the performance metrics.

In some examples, when the operator of the vehicle 100 selects, via the example user interface 111 of FIG. 1A, one(s) of the markers 304 on the first map 300, the example display control circuitry 210 of FIG. 2 causes the user interface 111 to present one(s) of the image(s) 220 (e.g., a first example image 220A and/or a second example image 220B) corresponding to the selected marker(s) 304. In the illustrated example of FIG. 3, the first image 220A is representative of crop residue at a first location, and the second image 220B is representative of crop residue at a second location (e.g., different from the first location). In this example, the display control circuitry 210 causes the user interface 111 to present a first example classification (e.g., a first rating) 306 determined for the crop residue at the first location, where the first classification 306 indicates that the crop residue is underprocessed in this example. In some examples, the operator of the vehicle 100 can select one or more classifications, and the display control circuitry 210 causes the user interface 111 to present one(s) of the images 220 corresponding to the selected classification(s).

In the example of FIG. 3, the display control circuitry 210 enables the operator to change or confirm the first classification 306 associated with the first image 220A. For example, the operator can visually inspect the first image 220A to determine whether the first classification 306 is correct and/or accurate. In this example, the display control circuitry 210 causes the user interface 111 to present a first example interactive control (e.g., a first button) 308 for confirming and/or approving the first classification 306 and a second example interactive control (e.g., a second button) 310 for changing the first classification 306. In some examples, the display control circuitry 210 causes the user interface 111 to present the first and second interactive controls 308, 310 in response to the example classification circuitry 208 of FIG. 2 determining that the first classification 306 is associated with a low confidence level.

In some examples, in response to the operator engaging the first interactive control 308, the classification circuitry 208 updates the confidence level associated with the first classification 306 to a high confidence level. In some examples, in response to the operator engaging the second interactive control 310, the operator can switch the first classification 306 to a different classification (e.g., from underprocessed to satisfactory or overprocessed). In some examples, in response to a change in the first classification 306, the display control circuitry 210 updates the first classification 306 presented on the user interface 111 and/or updates the color of the corresponding marker 304 presented on the user interface 111.

In some examples, the classification circuitry 208 updates classifications for the crop residue at one or more different locations of the first map 300 based on the change in the first classification 306. For example, the classification circuitry 208 compares the images 220 and/or the performance metrics at the one or more locations to the first image 220A and/or the performance metrics associated with the first image 220A. Based on the comparison, the classification circuitry 208 identifies one(s) of the locations having substantially similar characteristics (e.g., similar performance metrics and/or similar image characteristics) compared to the location at which the first image 220A was captured. In some such examples, the classification circuitry 208 updates the classification(s) for the identified locations to match the updated first classification 306. In some examples, the classification circuitry 208 adjusts or updates one or more classifications thresholds and/or re-trains one or more classification model(s) in response to the change in the first classification 306.

In some examples, the display control circuitry 210 causes the user interface 111 to present one or more options for selecting and/or displaying multiple ones of the images 220. For example, the display control circuitry 210 can present options to the operator for selecting and/or displaying one(s) of the images 220 corresponding to a particular classification, confidence level, performance metric value, range of performance metric values, and/or region of the map 300. In some such examples, the display control circuitry 210 enables the operator to simultaneously update, via the user interface 111, multiple ones of the classifications, the confidence levels, and/or the performance metric values for one(s) of the images 220.

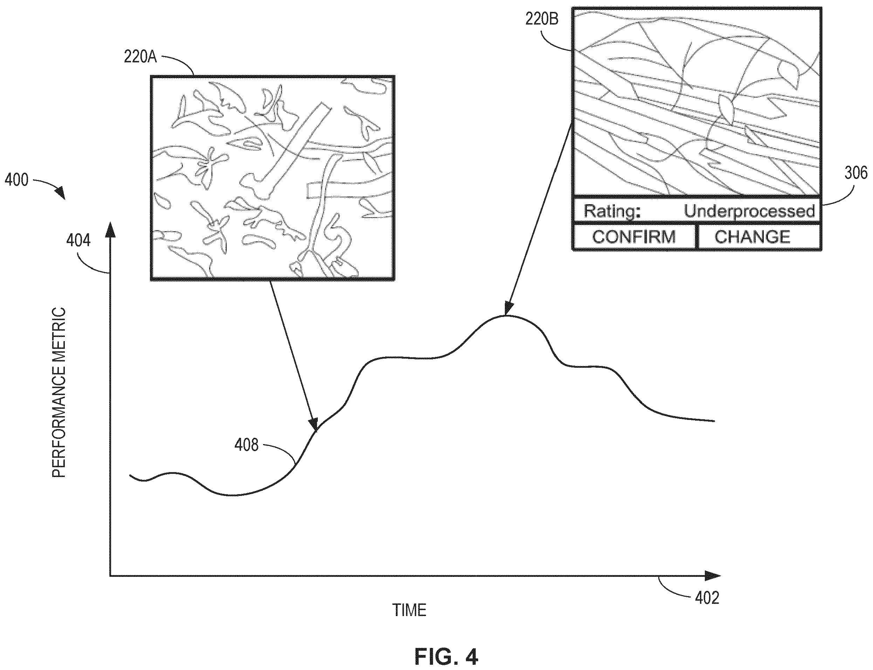

FIG. 4 illustrates an example plot (e.g., a time plot, a time history) 400 generated by the example performance monitoring circuitry 102 of FIGS. 1A and/or 2. In some examples, the plot 400 is generated by the example map generation circuitry 204 of FIG. 2 during operation of the vehicle 100. In the illustrated example of FIG. 4, the plot 400 associates performance information (e.g., one(s) of the images 220, the performance metrics, the classifications, and/or the confidence levels) with corresponding times at which the performance information was captured and/or determined. In some examples, the map generation circuitry 204 generates the plot 400 in addition to or instead of the map 300 of FIG. 3.

In the illustrated example of FIG. 4, the plot 400 includes a first example axis 402 representative of the times at which the crop residue information was captured and/or determined. In this example, the plot 400 includes a second example axis 404 representative of values for particular one(s) of the performance metrics, such as the crop residue metric in this example. In the example of FIG. 4, the second axis 404 can represent average crop length of crop residue in one(s) of the images 220. In some examples, a different one of the performance metrics (e.g., a minimum/maximum crop length, a width of spread of the crop residue, a trench depth, a trench width, a seed orientation, etc.) can be represented by the second axis 404. In this example, the plot 400 includes an example line 408 indicating values of the performance metric at corresponding times along the first axis 402. In some examples, a characteristic (e.g., color, shape, size, brightness, pattern, etc.) of the line 408 can vary along the first axis 402, where the characteristic can represent classifications of the performance at the corresponding times, confidence levels associated with the classifications, etc.

In some examples, the display control circuitry 210 of FIG. 2 causes the user interface 111 to present one(s) of the images 220 (e.g., the first image 220A and/or the second image 220B), one(s) of the classifications (e.g., the first classification 306), one(s) of the performance metrics, and/or one(s) of the confidence levels at one or more times corresponding to one or more locations along the line 408. For example, an operator can select the location(s) via user input to the user interface 111, and the display control circuitry 210 causes the user interface 111 to present one(s) of the images 220, the classifications, the performance metrics, and/or the confidence levels corresponding to the selected location(s). As described above in connection with FIG. 3, the operator can, via user input to the user interface 111, confirm and/or adjust one(s) of the classifications, the performance metrics, and/or the confidence levels. In some examples, the display control circuitry 210 adjusts the plot 400 based on the user input. Additionally or alternatively, the classification circuitry 208 of FIG. 2 can adjust one or more classification thresholds and/or re-train one or more classification models based on the user input.

FIG. 5 illustrates an example table 500 representing example performance information that can be monitored and/or obtained by the performance monitoring circuitry of FIG. 2. In the illustrated example of FIG. 5, the table 500 includes a third example column 506 representing example one(s) of the performance metrics that can be determined by the performance monitoring circuitry 102. For example, the performance metrics can include a residue spread metric, a residue length metric (e.g., an average residue length, a maximum/minimum residue length, etc.), a grain quality metric, a downed crop metric, a yield metric (e.g., a crop yield metric, a grain yield metric), a debris metric, a residue size metric, a residue coverage metric, a weed presence metric, a soil quality metric, a trench residue metric, a seed orientation metric, a trench quality metric (e.g., a seed bed quality metric), a trench depth metric, a soil moisture metric, an applied material metric, and/or a weed identification metric. In some examples, one or more different performance metrics can be used in addition to or instead of one(s) of the performance metrics shown in FIG. 5.

In the illustrated example of FIG. 5, the table 500 includes a first example column 502 representing example operations (e.g., vehicle operations, production steps) of the vehicle 100 during which corresponding one(s) the performance metrics in the third column 506 can be collected and/or obtained. For example, the operations can include harvesting, tilling, planting, and/or spraying. In some examples, one or more different operations of the vehicle 100 can be represented in the table 500 (e.g., in addition to or instead of one(s) of the operations shown in FIG. 5). In this example, a second example column 504 represents example images (e.g., context images) captured by the camera(s) 110 of FIG. 1A for corresponding one(s) of the performance metrics in the third column 506. For example, the image(s) can be representative of one or more scenes internal to the vehicle 100 (e.g., along the residue system 104A and/or the grain elevator 104D of FIG. 1A). In some examples, the image(s) can be representative of one or more scenes external to the vehicle 100 (e.g., a forward-facing scene and/or a rearward-facing scene with respect to the vehicle 100, a projected path of the vehicle 100, one or more trenches in a field, etc.).

In the illustrated example of FIG. 5, the table 500 includes a fourth example column 508 indicating whether corresponding one(s) of the performance metrics represented in the third column 506 are derived from (e.g., determined based on) the image(s) represented in the second column 504. In this example, the table 500 includes a fifth example column 510 representing example one(s) of the sensors 106 of FIG. 1A that can be used to determine corresponding one(s) of the performance metrics represented in the third column 506. In the illustrated example of FIG. 5, a sixth example column 512 represents one or more example actuators and/or example one(s) of the vehicle systems 104 of FIG. 5 that can be adjusted by the example performance monitoring circuitry 102 of FIG. 2 based on the performance metrics represented in the third column 506. In some examples, different one(s) of the sensors 106 and/or the actuators can be represented in the example table 500 (e.g., in addition to or instead of one(s) of the sensors 106 and/or the actuators represented in FIG. 5). In some examples, the example table 500 of FIG. 5 can be stored in the example database 218 of FIG. 2 and/or output for presentation to an operator by the display control circuitry 210 of FIG. 2.

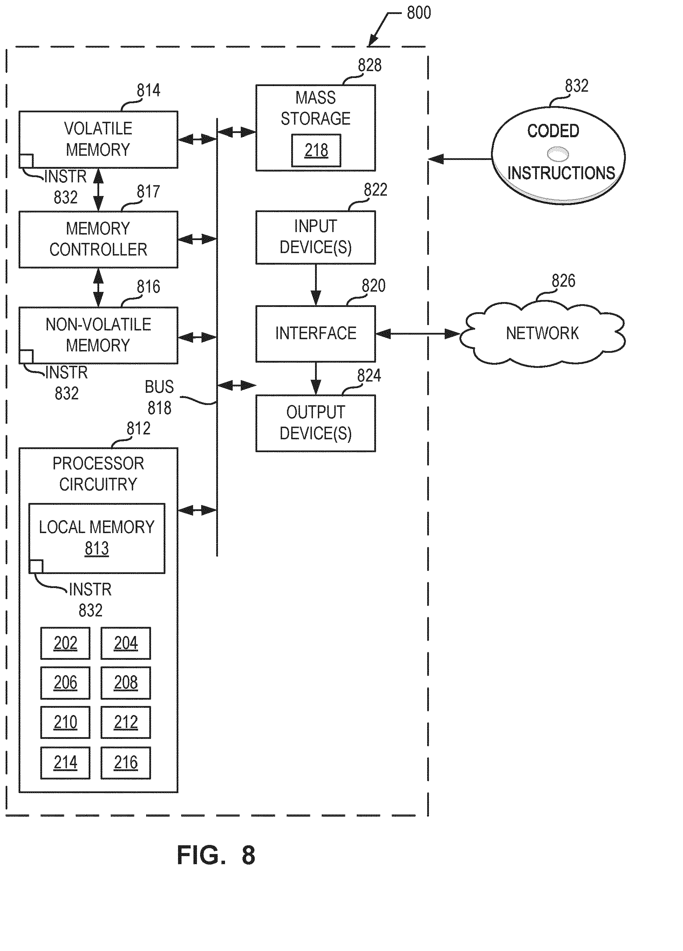

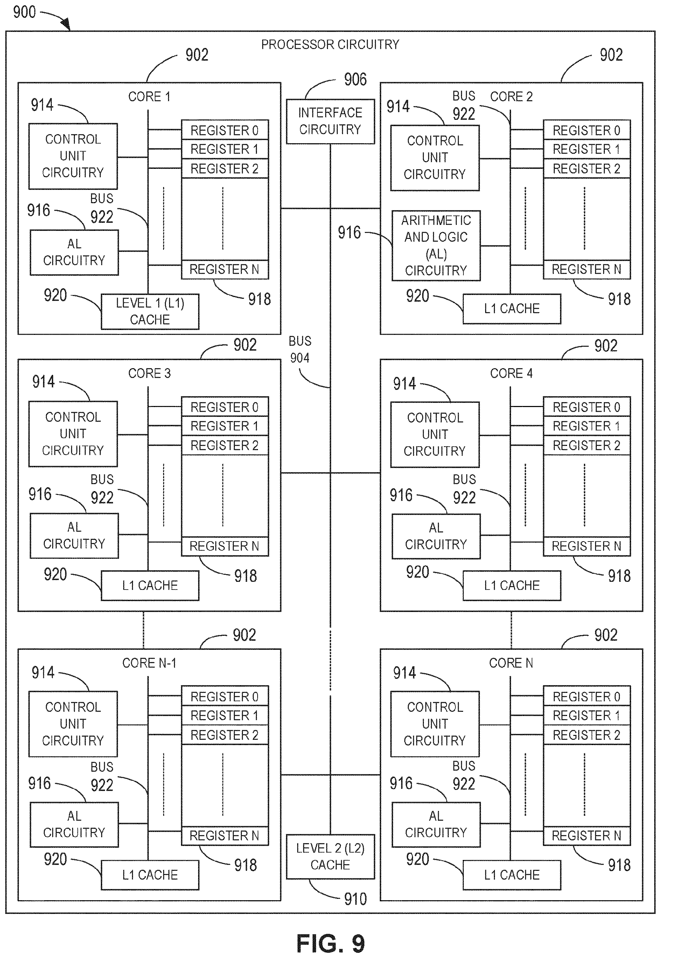

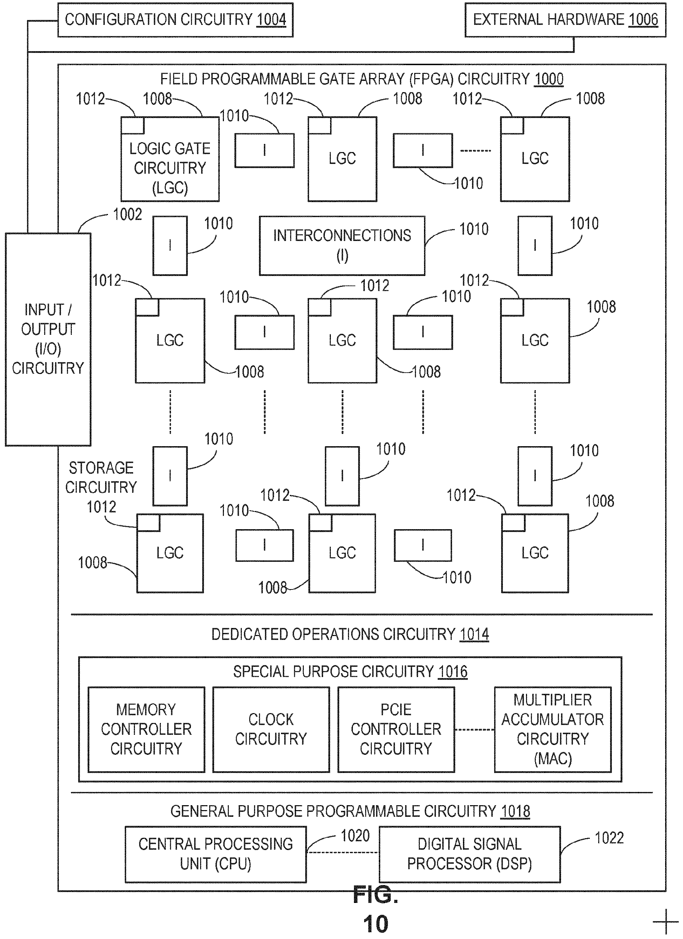

In some examples, the performance monitoring circuitry 102 includes means for obtaining sensor data. For example, the means for obtaining sensor data may be implemented by the sensor interface circuitry 202. In some examples, the sensor interface circuitry 202 may be instantiated by programmable circuitry such as the example programmable circuitry 812 of FIG. 8. For instance, the sensor interface circuitry 202 may be instantiated by the example microprocessor 900 of FIG. 9 executing machine executable instructions such as those implemented by at least blocks 602, 604, 618 of FIG. 6. In some examples, sensor interface circuitry 202 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the sensor interface circuitry 202 may be instantiated by any other combination of hardware, software, and/or firmware. For example, the sensor interface circuitry 202 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the performance monitoring circuitry 102 includes means for generating a map. For example, the means for generating a map may be implemented by the map generation circuitry 204. In some examples, the map generation circuitry 204 may be instantiated by programmable circuitry such as the example programmable circuitry 812 of FIG. 8. For instance, the map generation circuitry 204 may be instantiated by the example microprocessor 900 of FIG. 9 executing machine executable instructions such as those implemented by at least block 610 of FIG. 6. In some examples, map generation circuitry 204 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the map generation circuitry 204 may be instantiated by any other combination of hardware, software, and/or firmware. For example, the map generation circuitry 204 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the performance monitoring circuitry 102 includes means for obtaining user input. For example, the means for obtaining user input may be implemented by the input interface circuitry 206. In some examples, the input interface circuitry 206 may be instantiated by programmable circuitry such as the example programmable circuitry 812 of FIG. 8. For instance, the input interface circuitry 206 may be instantiated by the example microprocessor 900 of FIG. 9 executing machine executable instructions such as those implemented by at least blocks 702, 718 of FIG. 7. In some examples, input interface circuitry 206 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the input interface circuitry 206 may be instantiated by any other combination of hardware, software, and/or firmware. For example, the input interface circuitry 206 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the performance monitoring circuitry 102 includes means for classifying. For example, the means for classifying may be implemented by the classification circuitry 208. In some examples, the classification circuitry 208 may be instantiated by programmable circuitry such as the example programmable circuitry 812 of FIG. 8. For instance, the classification circuitry 208 may be instantiated by the example microprocessor 900 of FIG. 9 executing machine executable instructions such as those implemented by at least blocks 606, 608 of FIG. 6 and/or blocks 710, 712 of FIG. 7. In some examples, classification circuitry 208 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the classification circuitry 208 may be instantiated by any other combination of hardware, software, and/or firmware. For example, the classification circuitry 208 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the performance monitoring circuitry 102 includes means for controlling a display. For example, the means for controlling a display may be implemented by the display control circuitry 210. In some examples, the display control circuitry 210 may be instantiated by programmable circuitry such as the example programmable circuitry 812 of FIG. 8. For instance, the display control circuitry 210 may be instantiated by the example microprocessor 900 of FIG. 9 executing machine executable instructions such as those implemented by at least blocks 612, 616 of FIG. 6 and/or blocks 704, 706, 708, 716 of FIG. 7. In some examples, display control circuitry 210 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the display control circuitry 210 may be instantiated by any other combination of hardware, software, and/or firmware. For example, the display control circuitry 210 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the performance monitoring circuitry 102 includes means for training. For example, the means for training may be implemented by the model training circuitry 212. In some examples, the model training circuitry 212 may be instantiated by programmable circuitry such as the example programmable circuitry 812 of FIG. 8. For instance, the model training circuitry 212 may be instantiated by the example microprocessor 900 of FIG. 9 executing machine executable instructions such as those implemented by at least block 714 of FIG. 7. In some examples, model training circuitry 212 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the model training circuitry 212 may be instantiated by any other combination of hardware, software, and/or firmware. For example, the model training circuitry 212 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the performance monitoring circuitry 102 includes means for controlling a vehicle setting. For example, the means for controlling a vehicle setting may be implemented by the setting control circuitry 214. In some examples, the setting control circuitry 214 may be instantiated by programmable circuitry such as the example programmable circuitry 812 of FIG. 8. For instance, the setting control circuitry 214 may be instantiated by the example microprocessor 900 of FIG. 9 executing machine executable instructions such as those implemented by at least block 614 of FIG. 6. In some examples, setting control circuitry 214 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the setting control circuitry 214 may be instantiated by any other combination of hardware, software, and/or firmware. For example, the setting control circuitry 214 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the performance monitoring circuitry 102 includes means for interfacing with a network. For example, the means for interfacing with a network may be implemented by the network interface circuitry 216. In some examples, the network interface circuitry 216 may be instantiated by programmable circuitry such as the example programmable circuitry 812 of FIG. 8. For instance, the network interface circuitry 216 may be instantiated by the example microprocessor 900 of FIG. 9 executing machine executable instructions such as those implemented by at least block 604 of FIG. 6 and/or blocks 702, 706 of FIG. 7. In some examples, network interface circuitry 216 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the network interface circuitry 216 may be instantiated by any other combination of hardware, software, and/or firmware. For example, the network interface circuitry 216 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the performance monitoring circuitry 102 of FIG. 1A is illustrated in FIG. 2, one or more of the elements, processes, and/or devices illustrated in FIG. 2 may be combined, divided, re-arranged, omitted, eliminated, and/or implemented in any other way. Further, the example sensor interface circuitry 202, the example map generation circuitry 204, the example input interface circuitry 206, the example classification circuitry 208, the example display control circuitry 210, the example model training circuitry 212, the example setting control circuitry 214, the example network interface circuitry 216, and/or, more generally, the example performance monitoring circuitry 102 of FIG. 2, may be implemented by hardware alone or by hardware in combination with software and/or firmware. Thus, for example, any of the example sensor interface circuitry 202, the example map generation circuitry 204, the example input interface circuitry 206, the example classification circuitry 208, the example display control circuitry 210, the example model training circuitry 212, the example setting control circuitry 214, the example network interface circuitry 216, and/or, more generally, the example performance monitoring circuitry 102, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example performance monitoring circuitry 102 of FIG. 2 may include one or more elements, processes, and/or devices in addition to, or instead of, those illustrated in FIG. 2, and/or may include more than one of any or all of the illustrated elements, processes and devices.

Flowchart(s) representative of example machine readable instructions, which may be executed by programmable circuitry to implement and/or instantiate the performance monitoring circuitry 102 of FIG. 2 and/or representative of example operations which may be performed by programmable circuitry to implement and/or instantiate the performance monitoring circuitry 102 of FIG. 2, are shown in FIGS. 6 and/or 7. The machine readable instructions may be one or more executable programs or portion(s) of one or more executable programs for execution by programmable circuitry such as the programmable circuitry 812 shown in the example programmable circuitry platform 800 discussed below in connection with FIG. 8 and/or may be one or more function(s) or portion(s) of functions to be performed by the example programmable circuitry (e.g., an FPGA) discussed below in connection with FIGS. 9 and/or 10. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, nonvolatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 6 and/or 7, many other methods of implementing the example performance monitoring circuitry 102 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 6 and/or 7 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

FIG. 6 is a flowchart representative of example machine readable instructions and/or example operations 600 that may be executed, instantiated, and/or performed by programmable circuitry to implement the example performance monitoring circuitry 102 of FIGS. 1A and/or 2. The example machine-readable instructions and/or the example operations 600 of FIG. 6 begin at block 602, at which the example performance monitoring circuitry 102 accesses one or more example images captured by the example camera(s) 110 of FIG. 1A. For example, the example sensor interface circuitry 202 of FIG. 2 accesses and/or obtains one or more of the images 220 of FIG. 2 captured by the camera(s) 110, where the images 220 can be representative of crop residue output by the residue system 104A, a field onto which the crop residue is output, a projected path of the vehicle 100, a portion of the field behind and/or surrounding the vehicle 100, a location internal to and/or external to the vehicle 100, etc.

At block 604, the example performance monitoring circuitry 102 obtains the example reference data 224 and/or the example sensor data 222 obtained by the example sensor(s) 106 of FIG. 1A. For example, the sensor interface circuitry 202 obtains the reference data 224 and/or the sensor data 222 from the sensor(s) 106. In some examples, the reference data 224 includes geographic locations and/or times at which the images 220 were captured. In some examples, the sensor data 222 includes signal(s) from one or more of the sensors 106, where the signal(s) are representative of an environment of the example vehicle 100 of FIG. 1A, one or more objects surrounding the vehicle 100, material being processed by one or more of the vehicle systems 104 of FIG. 1A, etc. In some examples, the example network interface circuitry 216 of FIG. 2 obtains at least one of the sensor data 222 or the reference data 224 via one or more devices (e.g., sensors and/or computers) communicatively coupled to the vehicle 100 via the example network 112 of FIG. 1A.

At block 606, the example performance monitoring circuitry 102 determines one or more example performance metrics corresponding to one(s) of the images 220. For example, the example classification circuitry 208 of FIG. 2 determines the performance metrics indicating, for example, a length (e.g., an average length, a greatest length, a smallest length, etc.) of crop residue represented in the corresponding image(s) 220 and/or a distribution (e.g., a width of spread, an area of the spread) of the crop residue, a width and/or depth of one or more trenches represented in the image(s) 220, an amount of clean and/or unbroken grain material represented in the image(s) 220, etc. In some examples, the classification circuitry 208 determines the performance metrics based on image processing and/or optical analysis of the image(s) 220 and/or based on the sensor data 222.

At block 608, the example performance monitoring circuitry 102 determines one or more classifications for the image(s) 220 based on the corresponding performance metrics. For example, the classification circuitry 208 determines the classification(s) for corresponding one(s) of the image(s) 220 by comparing the performance metrics to one or more classification thresholds. For example, the classification circuitry 208 determines whether the crop residue represented in the corresponding image(s) 220 is underprocessed, overprocessed, or satisfactory based on whether the associated crop residue metrics satisfy the classification threshold(s). In some examples, the classification circuitry 208 determines whether harvested grain material represented in the image(s) 220 is high quality grain material or low quality grain material based on whether the associated grain quality metrics satisfy the corresponding grain quality threshold(s). In some examples, one or more different classifications (e.g., based on the soil quality metric(s), the trench quality metric(s), the downed crop metric(s), the debris metric(s), etc.) can be determined instead. In some examples, the classification circuitry 208 determines the classification(s) by providing the image(s) 220 and/or the associated performance metrics as input to one or more classification model(s). In some such examples, the classification model(s) include one or more neural network models trained based on labeled training data including images of processed residue, harvested grain material, a portion of the field in a projected path and/or surrounding the vehicle 100, etc., and associated classification labels. In some examples, the classification circuitry 208 determines confidence level(s) associated with the classification(s).

At block 610, the example performance monitoring circuitry 102 generates one or more example maps and/or plots to be included in the example display information 226 of FIG. 2. For example, the example map generation circuitry 204 of FIG. 2 generates the map(s) and/or plot(s) by storing performance information (e.g., the image(s) 220, the performance metric(s), and/or the classification(s)) in association with the corresponding time(s) and/or geographic location(s) represented in the reference data 224. For example, the map generation circuitry 204 generates an example geographic map (e.g., the example map 300 of FIG. 3) by associating the performance information with the geographic locations for which the performance information was obtained and/or determined. Additionally or alternatively, the map generation circuitry 204 generates an example plot (e.g., a time history, the example plot 400 of FIG. 4) by associating the performance information with the times for which the performance information was obtained and/or determined.

At block 612, the example performance monitoring circuitry 102 causes presentation of the example display information 226 via the example user interface 111 of FIG. 1A. For example, the example display control circuitry 210 of FIG. 2 causes the user interface 111 to present the display information 226 including one or more of the maps and/or plots generated by the map generation circuitry 204. In some examples, the display control circuitry 210 causes the user interface 111 to present one(s) of the images 220, the performance metrics, and/or the classifications associated with selected one(s) of the times and/or geographic locations represented in the map(s) and/or plot(s).

At block 614, the example performance monitoring circuitry 102 adjusts one or more vehicle control settings based on the classification(s). For example, the example setting control circuitry 214 of FIG. 2 adjusts, based on the classification(s), at least one of the vehicle control settings including a speed of the example residue system 104A of FIG. 1A, counter knife positions of the residue system 104A, vane positions of the residue system 104A, travel speed of the vehicle 100, speed and/or clearance of a cleaning system (e.g., a grain cleaning system, a threshing/cleaning system) of the vehicle 100, height and/or orientation of the header 114, position and/or rotation speed of an example reel of the vehicle 100, depth and/or angle of the tillage tool 104E, etc. In some examples, the setting control circuitry 214 directs one(s) of the vehicle systems 104 to adjust the one(s) of the vehicle control settings in response to determining that the crop residue is overprocessed and/or underprocessed at one or more geographic locations and/or times, in response to determining that the harvested crop material has low grain quality, etc.

At block 616, the example performance monitoring circuitry 102 updates the display information 226 based on example user input 228 provided via the user interface 111. For example, the display control circuitry 210 presents and/or adjusts one(s) of the images 220, the classifications, and/or the performance metrics based on a selection by the operator via the user input 228. Updating of the display information 226 based on the user input 228 is described further below in connection with FIG. 7.

At block 618, the example performance monitoring circuitry 102 determines whether to continue monitoring. For example, the sensor interface circuitry 202 determines to continue monitoring when the vehicle 100 is operating and/or when sensor interface circuitry 202 receives additional image(s) 220 and/or sensor data 222. In response to the sensor interface circuitry 202 determining to continue monitoring (e.g., block 618 returns a result of YES), control returns to block 602. Alternatively, in response to the sensor interface circuitry 202 determining not to continue monitoring (e.g., block 618 returns a result of NO), control ends.

FIG. 7 is a flowchart representative of example machine readable instructions and/or example operations 700 that may be executed, instantiated, and/or performed by programmable circuitry to update the example display information 226 based on the example user input 228 of FIG. 2 in connection with block 616 of FIG. 6. The example machine-readable instructions and/or the example operations 700 of FIG. 7 begin at block 702, at which the example performance monitoring circuitry 102 accesses the example user input 228 provided via the example user interface 111 of FIG. 1A. For example, the example input interface circuitry 206 of FIG. 2 obtains and/or accesses the user input 228 provided by the operator of the vehicle 100 via the user interface 111. Additionally or alternatively, the example network interface circuitry 216 obtains the user input 228 from a device (e.g., a computer and/or a mobile device) communicatively coupled to the vehicle 100 via the example network 112 of FIG. 1A.

At block 704, the example performance monitoring circuitry 102 of FIG. 2 selects one or more of the image(s) 220 based on the user input 228. For example, the display control circuitry 210 selects the image(s) 220 corresponding to one or more times and/or geographic locations selected by the operator via the user input 228. In some examples, the display control circuitry 210 selects the image(s) 220 corresponding to one or more of the classifications, one or more of the performance metrics, and/or one or more of the confidence levels selected by the operator via the user input 228.

At block 706, the example performance monitoring circuitry 102 causes presentation (e.g., display) of the selected image(s) 220 and/or the corresponding classification(s). For example, the display control circuitry 210 causes the user interface 111 to present and/or enlarge the selected image(s) 220 and/or the corresponding classification(s) to the operator. In some examples, the network interface circuitry 216 causes presentation of the selected image(s) 220 and/or the corresponding classification(s) by one or more devices communicatively coupled to the network interface circuitry 216 via the network 112.

At block 708, the example performance monitoring circuitry 102 enables the operator to confirm (and/or change) one(s) of the classifications for one or more of the images 220. For example, the display control circuitry 210 enables the user interface 111 to present one or more interactive controls (e.g., the interactive controls 308, 310 of FIG. 3) to the operator for at least one of confirming or changing the one(s) of the classifications for the images 220. In some examples, the interactive controls correspond to respective one(s) of the images 220, such that the operator can confirm and/or change the classifications for the respective one(s) of the images 220. In some examples, one of the interactive controls corresponds to multiple ones of images 220, such that the operator can confirm and/or change multiple classifications for the multiple ones of the images 220 at substantially the same time.

At block 710, the example performance monitoring circuitry 102 determines whether one or more of the classifications changed. For example, the example classification circuitry 208 of FIG. 2 determines whether the operator changed one(s) of the classifications based on the user input 228. In response to the classification circuitry 208 determining that one or more of the classifications changed (e.g., block 710 returns a result of YES), control proceeds to block 712. Alternatively, in response to the classification circuitry 208 determining that the classifications were confirmed and/or not changed (e.g., block 710 returns a result of YES), control proceeds to block 718.

At block 712, the example performance monitoring circuitry 102 re-classifies one or more of the images 220 based on the user input 228. For example, the classification circuitry 208 updates one(s) of the classifications based on new classification(s) selected by the operator via the user input 228. In some examples, the classification circuitry 208 updates, in response to the operator changing one or more first classifications for first one(s) of the images 220, one or more second classifications for second one(s) of the images 220 that are similar to the first one(s) of the images 220 and/or have similar performance metrics to the first one(s) of the images 220.

At block 714, the example performance monitoring circuitry 102 adjusts and/or re-trains one or more classification models and/or one or more classification thresholds utilized by the classification circuitry 208. For example, the example model training circuitry 212 of FIG. 2 generates new training data based on the updated classification(s), and re-trains the classification model(s) based on the new training data. Additionally or alternatively, the model training circuitry 212 adjusts the classification threshold(s) such that the classification circuitry 208 outputs the operator-adjusted classification(s) when the associated one(s) of the images 220 are evaluated based on the classification threshold(s).

At block 716, the example performance monitoring circuitry 102 updates the example display information 226. For example, the display control circuitry 210 updates the display information 226 such that the user interface 111 indicates the updated classification(s) to the operator. In some examples, the display control circuitry 210 updates the display information 226 by updating labels corresponding to the image(s) 220, updating a characteristic (e.g., a color, a size, a shape, etc.) of one or more markers corresponding to the image(s) 220, etc. In some examples, the display control circuitry 210 causes the user interface 111 to present the updated display information to the operator.

At block 718, the example performance monitoring circuitry 102 determines whether additional user input 228 is received. For example, in response to the input interface circuitry 206 receiving and/or obtaining additional user input 228 (e.g., block 718 returns a result of YES), control returns to block 702. Alternatively, in response to the input interface circuitry 206 not receiving and/or not obtaining additional user input 228 (e.g., block 718 returns a result of NO), control returns to the process of FIG. 6.

FIG. 8 is a block diagram of an example programmable circuitry platform 800 structured to execute and/or instantiate the example machine-readable instructions and/or the example operations of FIGS. 6 and/or 7 to implement the performance monitoring circuitry 102 of FIG. 2. The programmable circuitry platform 800 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 800 of the illustrated example includes programmable circuitry 812. The programmable circuitry 812 of the illustrated example is hardware. For example, the programmable circuitry 812 can be implemented by one or more integrated circuits, logic circuits, FPGAs, microprocessors, CPUs, GPUs, DSPs, and/or microcontrollers from any desired family or manufacturer. The programmable circuitry 812 may be implemented by one or more semiconductor based (e.g., silicon based) devices. In this example, the programmable circuitry 812 implements the example sensor interface circuitry 202, the example map generation circuitry 204, the example input interface circuitry 206, the example classification circuitry 208, the example display control circuitry 210, the example model training circuitry 212, the example setting control circuitry 214, and/or the example network interface circuitry 216.

The programmable circuitry 812 of the illustrated example includes a local memory 813 (e.g., a cache, registers, etc.). The programmable circuitry 812 of the illustrated example is in communication with main memory 814, 816, which includes a volatile memory 814 and a non-volatile memory 816, by a bus 818. The volatile memory 814 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 816 may be implemented by flash memory and/or any other desired type of memory device. Access to the main memory 814, 816 of the illustrated example is controlled by a memory controller 817. In some examples, the memory controller 817 may be implemented by one or more integrated circuits, logic circuits, microcontrollers from any desired family or manufacturer, or any other type of circuitry to manage the flow of data going to and from the main memory 814, 816.

The programmable circuitry platform 800 of the illustrated example also includes interface circuitry 820. The interface circuitry 820 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 822 are connected to the interface circuitry 820. The input device(s) 822 permit(s) a user (e.g., a human user, a machine user, etc.) to enter data and/or commands into the programmable circuitry 812. The input device(s) 822 can be implemented by, for example, an audio sensor, a microphone, a camera (still or video), a keyboard, a button, a mouse, a touchscreen, a trackpad, a trackball, an isopoint device, and/or a voice recognition system.

One or more output devices 824 are also connected to the interface circuitry 820 of the illustrated example. The output device(s) 824 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 820 of the illustrated example, thus, typically includes a graphics driver card, a graphics driver chip, and/or graphics processor circuitry such as a GPU.

The interface circuitry 820 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 826. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 800 of the illustrated example also includes one or more mass storage discs or devices 828 to store firmware, software, and/or data. Examples of such mass storage discs or devices 828 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 832, which may be implemented by the machine readable instructions of FIGS. 6 and/or 7, may be stored in the mass storage device 828, in the volatile memory 814, in the non-volatile memory 816, and/or on at least one non-transitory computer readable storage medium such as a CD or DVD which may be removable.

FIG. 9 is a block diagram of an example implementation of the programmable circuitry 812 of FIG. 8. In this example, the programmable circuitry 812 of FIG. 8 is implemented by a microprocessor 900. For example, the microprocessor 900 may be a general-purpose microprocessor (e.g., general-purpose microprocessor circuitry). The microprocessor 900 executes some or all of the machine-readable instructions of the flowcharts of FIGS. 6 and/or 7 to effectively instantiate the circuitry of FIG. 2 as logic circuits to perform operations corresponding to those machine readable instructions. In some such examples, the circuitry of FIG. 2 is instantiated by the hardware circuits of the microprocessor 900 in combination with the machine-readable instructions. For example, the microprocessor 900 may be implemented by multi-core hardware circuitry such as a CPU, a DSP, a GPU, an XPU, etc. Although it may include any number of example cores 902 (e.g., 1 core), the microprocessor 900 of this example is a multi-core semiconductor device including N cores. The cores 902 of the microprocessor 900 may operate independently or may cooperate to execute machine readable instructions. For example, machine code corresponding to a firmware program, an embedded software program, or a software program may be executed by one of the cores 902 or may be executed by multiple ones of the cores 902 at the same or different times. In some examples, the machine code corresponding to the firmware program, the embedded software program, or the software program is split into threads and executed in parallel by two or more of the cores 902. The software program may correspond to a portion or all of the machine readable instructions and/or operations represented by the flowcharts of FIGS. 6 and/or 7.

The cores 902 may communicate by a first example bus 904. In some examples, the first bus 904 may be implemented by a communication bus to effectuate communication associated with one(s) of the cores 902. For example, the first bus 904 may be implemented by at least one of an Inter-Integrated Circuit (I2C) bus, a Serial Peripheral Interface (SPI) bus, a PCI bus, or a PCIe bus. Additionally or alternatively, the first bus 904 may be implemented by any other type of computing or electrical bus. The cores 902 may obtain data, instructions, and/or signals from one or more external devices by example interface circuitry 906. The cores 902 may output data, instructions, and/or signals to the one or more external devices by the interface circuitry 906. Although the cores 902 of this example include example local memory 920 (e.g., Level 1 (L1) cache that may be split into an L1 data cache and an L1 instruction cache), the microprocessor 900 also includes example shared memory 910 that may be shared by the cores (e.g., Level 2 (L2 cache)) for high-speed access to data and/or instructions. Data and/or instructions may be transferred (e.g., shared) by writing to and/or reading from the shared memory 910. The local memory 920 of each of the cores 902 and the shared memory 910 may be part of a hierarchy of storage devices including multiple levels of cache memory and the main memory (e.g., the main memory 814, 816 of FIG. 8). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 902 may be referred to as a CPU, DSP, GPU, etc., or any other type of hardware circuitry. Each core 902 includes control unit circuitry 914, arithmetic and logic (AL) circuitry (sometimes referred to as an ALU) 916, a plurality of registers 918, the local memory 920, and a second example bus 922. Other structures may be present. For example, each core 902 may include vector unit circuitry, single instruction multiple data (SIMD) unit circuitry, load/store unit (LSU) circuitry, branch/jump unit circuitry, floating-point unit (FPU) circuitry, etc. The control unit circuitry 914 includes semiconductor-based circuits structured to control (e.g., coordinate) data movement within the corresponding core 902. The AL circuitry 916 includes semiconductor-based circuits structured to perform one or more mathematic and/or logic operations on the data within the corresponding core 902. The AL circuitry 916 of some examples performs integer based operations. In other examples, the AL circuitry 916 also performs floating-point operations. In yet other examples, the AL circuitry 916 may include first AL circuitry that performs integer-based operations and second AL circuitry that performs floating-point operations. In some examples, the AL circuitry 916 may be referred to as an Arithmetic Logic Unit (ALU).

The registers 918 are semiconductor-based structures to store data and/or instructions such as results of one or more of the operations performed by the AL circuitry 916 of the corresponding core 902. For example, the registers 918 may include vector register(s), SIMD register(s), general-purpose register(s), flag register(s), segment register(s), machine-specific register(s), instruction pointer register(s), control register(s), debug register(s), memory management register(s), machine check register(s), etc. The registers 918 may be arranged in a bank as shown in FIG. 9. Alternatively, the registers 918 may be organized in any other arrangement, format, or structure, such as by being distributed throughout the core 902 to shorten access time. The second bus 922 may be implemented by at least one of an I2C bus, a SPI bus, a PCI bus, or a PCIe bus.

Each core 902 and/or, more generally, the microprocessor 900 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 900 is a semiconductor device fabricated to include many transistors interconnected to implement the structures described above in one or more integrated circuits (ICs) contained in one or more packages.

The microprocessor 900 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 900, in the same chip package as the microprocessor 900 and/or in one or more separate packages from the microprocessor 900.

FIG. 10 is a block diagram of another example implementation of the programmable circuitry 812 of FIG. 8. In this example, the programmable circuitry 812 is implemented by FPGA circuitry 1000. For example, the FPGA circuitry 1000 may be implemented by an FPGA. The FPGA circuitry 1000 can be used, for example, to perform operations that could otherwise be performed by the example microprocessor 900 of FIG. 9 executing corresponding machine readable instructions. However, once configured, the FPGA circuitry 1000 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 900 of FIG. 9 described above (which is a general purpose device that may be programmed to execute some or all of the machine readable instructions represented by the flowchart(s) of FIGS. 6 and/or 7 but whose interconnections and logic circuitry are fixed once fabricated), the FPGA circuitry 1000 of the example of FIG. 10 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 6 and/or 7. In particular, the FPGA circuitry 1000 may be thought of as an array of logic gates, interconnections, and switches. The switches can be programmed to change how the logic gates are interconnected by the interconnections, effectively forming one or more dedicated logic circuits (unless and until the FPGA circuitry 1000 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 6 and/or 7. As such, the FPGA circuitry 1000 may be configured and/or structured to effectively instantiate some or all of the operations/functions corresponding to the machine readable instructions of the flowchart(s) of FIGS. 6 and/or 7 as dedicated logic circuits to perform the operations/functions corresponding to those software instructions in a dedicated manner analogous to an ASIC. Therefore, the FPGA circuitry 1000 may perform the operations/functions corresponding to the some or all of the machine readable instructions of FIGS. 6 and/or 7 faster than the general-purpose microprocessor can execute the same.

In the example of FIG. 10, the FPGA circuitry 1000 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1000 of FIG. 10 may access and/or load the binary file to cause the FPGA circuitry 1000 of FIG. 10 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1000 of FIG. 10 to cause configuration and/or structuring of the FPGA circuitry 1000 of FIG. 10, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1000 of FIG. 10 may access and/or load the binary file to cause the FPGA circuitry 1000 of FIG. 10 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1000 of FIG. 10 to cause configuration and/or structuring of the FPGA circuitry 1000 of FIG. 10, or portion(s) thereof.

The FPGA circuitry 1000 of FIG. 10, includes example input/output (I/O) circuitry 1002 to obtain and/or output data to/from example configuration circuitry 1004 and/or external hardware 1006. For example, the configuration circuitry 1004 may be implemented by interface circuitry that may obtain a binary file, which may be implemented by a bit stream, data, and/or machine-readable instructions, to configure the FPGA circuitry 1000, or portion(s) thereof. In some such examples, the configuration circuitry 1004 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1006 may be implemented by external hardware circuitry. For example, the external hardware 1006 may be implemented by the microprocessor 900 of FIG. 9.

The FPGA circuitry 1000 also includes an array of example logic gate circuitry 1008, a plurality of example configurable interconnections 1010, and example storage circuitry 1012. The logic gate circuitry 1008 and the configurable interconnections 1010 are configurable to instantiate one or more operations/functions that may correspond to at least some of the machine readable instructions of FIGS. 6 and/or 7 and/or other desired operations. The logic gate circuitry 1008 shown in FIG. 10 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1008 to enable configuration of the electrical structures and/or the logic gates to form circuits to perform desired operations/functions. The logic gate circuitry 1008 may include other electrical structures such as look-up tables (LUTs), registers (e.g., flip-flops or latches), multiplexers, etc.

The configurable interconnections 1010 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1008 to program desired logic circuits.

The storage circuitry 1012 of the illustrated example is structured to store result(s) of the one or more of the operations performed by corresponding logic gates. The storage circuitry 1012 may be implemented by registers or the like. In the illustrated example, the storage circuitry 1012 is distributed amongst the logic gate circuitry 1008 to facilitate access and increase execution speed.

The example FPGA circuitry 1000 of FIG. 10 also includes example dedicated operations circuitry 1014. In this example, the dedicated operations circuitry 1014 includes special purpose circuitry 1016 that may be invoked to implement commonly used functions to avoid the need to program those functions in the field. Examples of such special purpose circuitry 1016 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1000 may also include example general purpose programmable circuitry 1018 such as an example CPU 1020 and/or an example DSP 1022. Other general purpose programmable circuitry 1018 may additionally or alternatively be present such as a GPU, an XPU, etc., that can be programmed to perform other operations.

Although FIGS. 9 and 10 illustrate two example implementations of the programmable circuitry 812 of FIG. 8, many other approaches are contemplated. For example, FPGA circuitry may include an on-board CPU, such as one or more of the example CPU 1020 of FIG. 9. Therefore, the programmable circuitry 812 of FIG. 8 may additionally be implemented by combining at least the example microprocessor 900 of FIG. 9 and the example FPGA circuitry 1000 of FIG. 10. In some such hybrid examples, one or more cores 902 of FIG. 9 may execute a first portion of the machine readable instructions represented by the flowchart(s) of FIGS. 6 and/or 7 to perform first operation(s)/function(s), the FPGA circuitry 1000 of FIG. 10 may be configured and/or structured to perform second operation(s)/function(s) corresponding to a second portion of the machine readable instructions represented by the flowcharts of FIG. 6 and/or 7, and/or an ASIC may be configured and/or structured to perform third operation(s)/function(s) corresponding to a third portion of the machine readable instructions represented by the flowcharts of FIGS. 6 and/or 7.

It should be understood that some or all of the circuitry of FIG. 2 may, thus, be instantiated at the same or different times. For example, same and/or different portion(s) of the microprocessor 900 of FIG. 9 may be programmed to execute portion(s) of machine-readable instructions at the same and/or different times. In some examples, same and/or different portion(s) of the FPGA circuitry 1000 of FIG. 10 may be configured and/or structured to perform operations/functions corresponding to portion(s) of machine-readable instructions at the same and/or different times.

In some examples, some or all of the circuitry of FIG. 2 may be instantiated, for example, in one or more threads executing concurrently and/or in series. For example, the microprocessor 900 of FIG. 9 may execute machine readable instructions in one or more threads executing concurrently and/or in series. In some examples, the FPGA circuitry 1000 of FIG. 10 may be configured and/or structured to carry out operations/functions concurrently and/or in series. Moreover, in some examples, some or all of the circuitry of FIG. 2 may be implemented within one or more virtual machines and/or containers executing on the microprocessor 900 of FIG. 9.

In some examples, the programmable circuitry 812 of FIG. 8 may be in one or more packages. For example, the microprocessor 900 of FIG. 9 and/or the FPGA circuitry 1000 of FIG. 10 may be in one or more packages. In some examples, an XPU may be implemented by the programmable circuitry 812 of FIG. 8, which may be in one or more packages. For example, the XPU may include a CPU (e.g., the microprocessor 900 of FIG. 9, the CPU 1020 of FIG. 10, etc.) in one package, a DSP (e.g., the DSP 1022 of FIG. 10) in another package, a GPU in yet another package, and an FPGA (e.g., the FPGA circuitry 1000 of FIG. 10) in still yet another package.

A block diagram illustrating an example software distribution platform 1105 to distribute software such as the example machine readable instructions 832 of FIG. 8 to other hardware devices (e.g., hardware devices owned and/or operated by third parties from the owner and/or operator of the software distribution platform) is illustrated in FIG. 11. The example software distribution platform 1105 may be implemented by any computer server, data facility, cloud service, etc., capable of storing and transmitting software to other computing devices. The third parties may be customers of the entity owning and/or operating the software distribution platform 1105. For example, the entity that owns and/or operates the software distribution platform 1105 may be a developer, a seller, and/or a licensor of software such as the example machine readable instructions 832 of FIG. 8. The third parties may be consumers, users, retailers, OEMs, etc., who purchase and/or license the software for use and/or re-sale and/or sub-licensing. In the illustrated example, the software distribution platform 1005 includes one or more servers and one or more storage devices. The storage devices store the machine readable instructions 832, which may correspond to the example machine readable instructions of FIGS. 6 and/or 7, as described above. The one or more servers of the example software distribution platform 1105 are in communication with an example network 1110, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 832 from the software distribution platform 1105. For example, the software, which may correspond to the example machine readable instructions of FIG. 6 and/or 7, may be downloaded to the example programmable circuitry platform 800, which is to execute the machine readable instructions 832 to implement the performance monitoring circuitry 102. In some examples, one or more servers of the software distribution platform 1105 periodically offer, transmit, and/or force updates to the software (e.g., the example machine readable instructions 832 of FIG. 8) to ensure improvements, patches, updates, etc., are distributed and applied to the software at the end user devices. Although referred to as software above, the distributed "software" could alternatively be firmware.

From the foregoing, it will be appreciated that example systems, apparatus, articles of manufacture, and methods have been disclosed that enable an operator of a vehicle (e.g., an agricultural vehicle) to monitor performance metrics of one or more example vehicle systems of the vehicle. Examples disclosed herein generate one or more example maps (e.g., interactive maps) to be presented to the operator via an example user interface, where the map(s) associate example image(s) with corresponding times and/or geographic location(s) at which the image(s) were captured. Examples disclosed herein determine example performance metric(s) and/or example classification(s) associated with the image(s), and present the performance metric(s) and/or the classification(s) with the corresponding image(s) in the map(s). In some examples, the determined classification(s) and/or the determined performance metric(s) can be used to control and/or adjust (e.g., in substantially real time, during operation, after an operation, etc.) parameter(s) of the vehicle system(s) to improve performance of the vehicle system(s). Further, disclosed systems, apparatus, articles of manufacture, and methods improve the efficiency of using a computing device by adjusting and/or re-training one or more classification models and/or classification thresholds based on the operator confirming and/or changing one(s) of the classifications, thus improving accuracy of classification(s) determined for the image(s). Disclosed systems, apparatus, articles of manufacture, and methods are accordingly directed to one or more improvement(s) in the operation of a machine such as a computer or other electronic and/or mechanical device.

Example methods, apparatus, systems, and articles of manufacture to monitor performance of an agricultural vehicle are disclosed herein. Further examples and combinations thereof include the following:
Example 1 includes an apparatus comprising memory, machine readable instructions, and programmable circuitry to execute the machine readable instructions to access an image captured by a camera associated with an agricultural vehicle, obtain reference data corresponding to the image, determine a performance metric corresponding to the image, generate interactive display information by storing, in association with the reference data, (a) the image and (b) the performance metric, and cause presentation of the interactive display information via a user interface.
Example 2 includes the apparatus of example 1, wherein the performance metric corresponds to at least one of a residue size, residue coverage, a forage quality, a processed kernel quality, crop yield, weed presence, soil quality, grain quality, trench residue, trench width, trench depth, seed orientation, or soil moisture.
Example 3 includes the apparatus of example 1, wherein the programmable circuitry is to determine the performance metric based on image processing analysis of the image.
Example 4 includes the apparatus of example 1, wherein the programmable circuitry is to determine the performance metric based on a signal from one or more sensors associated with the agricultural vehicle.
Example 5 includes the apparatus of example 1, wherein the programmable circuitry is to determine a classification for the image by comparing the performance metric to one or more thresholds, and update the interactive display information to include the classification in association with the image and the performance metric.
Example 6 includes the apparatus of example 5, wherein the programmable circuitry is to enable, via the user interface, an operator to at least one of (a) confirm the classification for the image or (b) select a new classification for the image, in response to the operator confirming the classification, update the interactive display information based on the classification, and in response to the operator selecting the new classification, update the interactive display information based on the new classification.
Example 7 includes the apparatus of example 1, wherein the reference data includes at least one of (a) a geographic location at which the image was captured or (b) a time at which the image was captured.
Example 8 includes the apparatus of example 1, wherein the programmable circuitry is to adjust, based on the performance metric, a control setting of an actuator associated with the agricultural vehicle, the actuator corresponding to at least one of a chopper, a spreader, a kernel processor, a grain cleaning system, a tillage tool, a depth cylinder, a seed orienter, a cleaner, an opener, or a sprayer.
Example 9 includes a non-transitory computer readable medium comprising instructions that, when executed, cause programmable circuitry to at least access an image captured by a camera associated with an agricultural vehicle, obtain reference data corresponding to the image, determine a performance metric corresponding to the image, generate interactive display information by storing, in association with the reference data, (a) the image and (b) the performance metric, and cause presentation of the interactive display information via a user interface.
Example 10 includes the non-transitory computer readable medium of example 9, wherein the performance metric corresponds to at least one of a residue size, residue coverage, a forage quality, a processed kernel quality, crop yield, weed presence, soil quality, grain quality, trench residue, trench width, trench depth, seed orientation, or soil moisture.
Example 11 includes the non-transitory computer readable medium of example 9, wherein the instructions cause the programmable circuitry to determine the performance metric based on image processing analysis of the image.
Example 12 includes the non-transitory computer readable medium of example 9, wherein the instructions cause the programmable circuitry to determine the performance metric based on a signal from one or more sensors associated with the agricultural vehicle.
Example 13 includes the non-transitory computer readable medium of example 9, wherein the instructions cause the programmable circuitry to determine a classification for the image by comparing the performance metric to one or more thresholds, and update the interactive display information to include the classification in association with the image and the performance metric.
Example 14 includes the non-transitory computer readable medium of example 13, wherein the instructions cause the programmable circuitry to enable, via the user interface, an operator to at least one of (a) confirm the classification for the image or (b) select a new classification for the image, in response to the operator confirming the classification, update the interactive display information based on the classification, and in response to the operator selecting the new classification, update the interactive display information based on the new classification.
Example 15 includes the non-transitory computer readable medium of example 9, wherein the reference data includes at least one of (a) a geographic location at which the image was captured or (b) a time at which the image was captured.
Example 16 includes the non-transitory computer readable medium of example 9, wherein the instructions cause the programmable circuitry to adjust, based on the performance metric, a control setting of an actuator associated with the agricultural vehicle, the actuator corresponding to at least one of a chopper, a spreader, a kernel processor, a grain cleaning system, a tillage tool, a depth cylinder, a seed orienter, a cleaner, an opener, or a sprayer.
Example 17 includes a method comprising accessing an image captured by a camera associated with an agricultural vehicle, obtaining reference data corresponding to the image, determining a performance metric corresponding to the image, generating interactive display information by storing, in association with the reference data, (a) the image and (b) the performance metric, and causing presentation of the interactive display information via a user interface.
Example 18 includes the method of example 17, wherein the performance metric corresponds to at least one of a residue size, residue coverage, a forage quality, a processed kernel quality, crop yield, weed presence, soil quality, grain quality, trench residue, trench width, trench depth, seed orientation, or soil moisture.
Example 19 includes the method of example 17, further including determining the performance metric based on image processing analysis of the image.
Example 20 includes the method of example 17, further including determining the performance metric based on a signal from one or more sensors associated with the agricultural vehicle.
Example 21 includes the method of example 17, further including determining a classification for the image by comparing the performance metric to one or more thresholds, and updating the interactive display information to include the classification in association with the image and the performance metric.
Example 22 includes the method of example 21, further including enabling, via the user interface, an operator to at least one of (a) confirm the classification for the image or (b) select a new classification for the image, in response to the operator confirming the classification, updating the interactive display information based on the classification, and in response to the operator selecting the new classification, updating the interactive display information based on the new classification.
Example 23 includes the method of example 17, wherein the reference data includes at least one of (a) a geographic location at which the image was captured or (b) a time at which the image was captured.
Example 24 includes the method of example 17, further including adjusting, based on the performance metric, a control setting of an actuator associated with the agricultural vehicle, the actuator corresponding to at least one of a chopper, a spreader, a kernel processor, a grain cleaning system, a tillage tool, a depth cylinder, a seed orienter, a cleaner, an opener, or a sprayer.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus comprising:
a memory storing machine readable instructions; and
programmable circuitry configured to execute the machine readable instructions to:
access an image captured by a camera associated with an agricultural vehicle;
obtain reference data corresponding to the image;
determine a performance metric corresponding to the image;
generate interactive display information by storing, in association with the reference data, (a) the image and (b) the performance metric; and
cause presentation of the interactive display information via a user interface.

2. The apparatus of claim 1, wherein the performance metric corresponds to at least one of a residue size, residue coverage, a forage quality, a processed kernel quality, crop yield, weed presence, soil quality, grain quality, trench residue, trench width, trench depth, seed orientation, or soil moisture.

3. The apparatus of claim 1 or 2, wherein the programmable circuitry is configured to determine the performance metric based on image processing analysis of the image, or based on a signal from one or more sensors associated with the agricultural vehicle.

4. The apparatus of any one of claims 1 to 3, wherein the programmable circuitry is configured to:
determine a classification for the image by comparing the performance metric to one or more thresholds; and
update the interactive display information to include the classification in association with the image and the performance metric.

5. The apparatus of claim 4, wherein the programmable circuitry is configured to:
enable, via the user interface, an operator to at least one of (a) confirm the classification for the image or (b) select a new classification for the image;
in response to the operator confirming the classification, update the interactive display information based on the classification; and
in response to the operator selecting the new classification, update the interactive display information based on the new classification.

6. The apparatus of any one of claims 1 to 5, wherein the reference data includes at least one of (a) a geographic location at which the image was captured or (b) a time at which the image was captured.

7. The apparatus of any one of claims 1 to 6, wherein the programmable circuitry is configured to adjust, based on the performance metric, a control setting of an actuator associated with the agricultural vehicle, the actuator corresponding to at least one of a chopper, a spreader, a kernel processor, a grain cleaning system, a tillage tool, a depth cylinder, a seed orienter, a cleaner, an opener, or a sprayer.

8. A method comprising:
accessing an image captured by a camera associated with an agricultural vehicle;
obtaining reference data corresponding to the image;
determining a performance metric corresponding to the image;
generating interactive display information by storing, in association with the reference data, (a) the image and (b) the performance metric; and
causing presentation of the interactive display information via a user interface.

9. The method of claim 8, wherein the performance metric corresponds to at least one of a residue size, residue coverage, forage quality, a processed kernel quality, crop yield, weed presence, soil quality, grain quality, trench residue, trench width, trench depth, seed orientation, or soil moisture.

10. The method of claim 8 or 9, further including determining the performance metric based on image processing analysis of the image.

11. The method of claim 8 or 9, further including determining the performance metric based on a signal from one or more sensors associated with the agricultural vehicle.

12. The method of any one of claims 8 to 11, further including:
determining a classification for the image by comparing the performance metric to one or more thresholds; and
updating the interactive display information to include the classification in association with the image and the performance metric.

13. The method of claim 12, further including:
enabling, via the user interface, an operator to at least one of (a) confirm the classification for the image or (b) select a new classification for the image;
in response to the operator confirming the classification, updating the interactive display information based on the classification; and
in response to the operator selecting the new classification, updating the interactive display information based on the new classification.

14. The method of any one of claims 8 to 13, wherein the reference data includes at least one of (a) a geographic location at which the image was captured or (b) a time at which the image was captured.

15. The method of any one of claims 8 to 14, further including adjusting, based on the performance metric, a control setting of an actuator associated with the agricultural vehicle, the actuator corresponding to at least one of a chopper, a spreader, a kernel processor, a grain cleaning system, a tillage tool, a depth cylinder, a seed orienter, a cleaner, an opener, or a sprayer.
